(19) Europäisches Patentamt
European Patent Office
Office européen des brevets

(11) Publication number: **0 059 614 B1**

(12) # EUROPEAN PATENT SPECIFICATION

(45) Date of publication of patent specification: 03.05.89

(51) Int. Cl.[4]: **C 08 K 5/00,** C 08 L 27/06

(21) Application number: 82300980.8

(22) Date of filing: 25.02.82

(54) **Polymer stabilising compositions, polymers stabilised therewith and shaped articles formed from such polymers.**

(30) Priority: 26.02.81 US 238298
04.02.82 US 345830

(43) Date of publication of application:
08.09.82 Bulletin 82/36

(45) Publication of the grant of the patent:
03.05.89 Bulletin 89/18

(84) Designated Contracting States:
AT BE CH DE FR GB IT LI NL SE

(56) References cited:
EP-A-0 059 615
FR-A-2 434 835
GB-A-1 349 913
JP-A-55 160 044
JP-A-56 002 336
US-A-3 167 527

(73) Proprietor: MORTON THIOKOL, INC.
110 North Wacker Drive
Chicago Illinois 60606-1560 (US)

(72) Inventor: Bresser, Robert E.
3959 Bainbridge Drive
Sharonville Ohio 45241 (US)
Inventor: Mesch, Keith A.
2147 Broadhurst Avenue
Cincinnati Ohio 45240 (US)
Inventor: Wursthorn, Karl R.
1928 Creswell Drive
Cincinnati Ohio 45240 (US)

(74) Representative: Warren, Anthony Robert et al
BARON & WARREN 18 South End Kensington
London W8 5BU (GB)

EP 0 059 614 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to organotin stabilizer compositions for polymers, particularly halogen containing polymers.

Organotin compounds, particularly useful as stabilizers for halogen containing polymers, are well-known in the art. These organotin compounds can provide stabilization of such polymers when used alone or in combination with various compounds. For example, U.S. Patent No. 3,503,924 to M. W. Pollock discloses stabilizers for polyvinyl chloride resins which are mixtures containing a diorganotin mercaptide and a minor amount of an alpha-mercaptide acid. Pollock also discloses, in U.S. Patent No. 3,507,827, stabilizer combinations for decreasing early discolouration of polyvinyl chloride resins which contains (1) a dialkyl, dicycloalkyl or alkylcycloalkyl tin mercapto carboxylic acid ester, and (2) an alpha- or beta-mercapto acid having at least three carbon atoms, or an alpha- or beta-mercapto alcohol having at least two carbon atoms.

JP—A—1981—2336 discloses halogen-containing resin compositions stabilized by adding (a) sulphur-containing organotin compound containing a

—C—Sn—S group,

(b) a carboxylic acid thioester or a mercaptocarboxylic acid alcohol ester and (c) a mononuclear dihydric phenol.

FR—A—2434835 discloses the stabilization of halogen-containing resins using a combination of a tin compound and an organic acid ester which has mercaptan substituent on the alcohol residue of the ester.

JP—A—1980—160044 discloses halogen-containing resins stabilized with a combination of (a) an organotin mercaptocarboxylate or an organotin mercaptocarboxylate halide or sulphide and (b) a mercaptoalkyl carboxylate.

In accordance with this invention there are provided 3-component compositions for stabilizing halogen-containing organic polymers which comprise (1) a mono-organotin compound or mixture of mono-organotin compounds, (2) a synergistically effective amount of a mercaptan-containing organic compound or mixture of mercaptan-containing organic compounds and (3) a synergistically effective amount of a diorganotin compound or mixture of diorganotin compounds. This invention is also directed to polymer compositions comprising a polymer normally susceptible to heat induced deterioration and the stabilizing components (1) to (3) above. Additionally this invention is directed to articles of manufacture, e.g., pipe made from the above stabilized compositions.

The stabilizer compositions of this invention have quite unexpectedly been found to impart stabilization against the deteriorative effects of heat to halogen-containing organic polymers which are superior to those stabilizer compositions previously known in the art.

The term halogen-containing organic polymers as used herein refers to halogen-containing vinyl and vinylidene polymers or resins in which the halogen is attached directly to the carbon atoms. Preferably, the polymer is a vinyl halide polymer, more particularly a vinyl chloride polymer. Usually, the vinyl chloride polymer is made from monomers consisting of vinyl chloride alone or a mixture of monomers comprising, preferably, at least about 70% by weight based on the total monomer weight of vinyl chloride.

The halogen-containing polymers which can be stabilized according to this invention include chlorinated polyethylene having 14 to 75%, e.g., 27%, chloride by weight, chlorinated natural and synthetic rubber, rubber hydrochloride, chlorinated polystyrene, chlorinated polyvinyl chloride, polyvinyl bromide, polyvinyl fluoride, copolymers of vinyl chloride with 1 to 90%, preferably 1 to 30%, of a copolymerizable ethylenically unsaturated material such as, for example, vinyl acetate, vinyl butyrate, vinyl benzoate, vinylidene, chloride, diethyl furmarate, diethyl maleate, other alkyl fumarates and maleates, vinyl propionate, methyl acrylate, 2-ethylhexyl acrylate, butyl acrylate and other alkyl acrylates, methyl methacrylate, ethyl methacrylate, butyl methacrylate and other alkyl methacrylates, methyl alphachloroacrylate, styrene, trichloroethylene, vinyl ethers such as vinyl ethyl ether, vinyl chloroethyl ether and vinyl phenyl ether, vinyl ketones such as vinyl methyl ketone and vinyl phenyl ketone, 1-fluoro-2-chloroethylene, acrylonitrile, chloroacrylonitrile, allylidene diacetate and chloroallylidene diacetate. Typical copolymers include vinyl chloride-vinyl acetate (96:4 sold commercially as VYNW), vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), and vinyl chloride-2-ethylhexyl acrylate (80:20). In addition to the stabilizer compositions of this invention, there can also be incorporated into the halogen-containing organic polymer conventional additives such as plasticizers, pigments, fillers, dyes, ultraviolet light absorbing agents, densifying agents and the like.

The mono-organotin compounds (1) useful in this invention contain one or more tetravalent tin atoms which each have one direct tin to carbon bond and have structures selected from the following formulae:

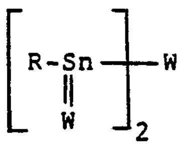 , (I)

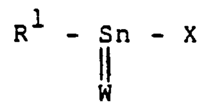 , (II)

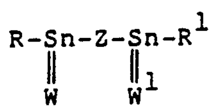 (IIa)

$R - Sn - X_3$ (III)

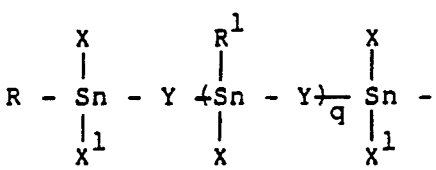 (IV) and

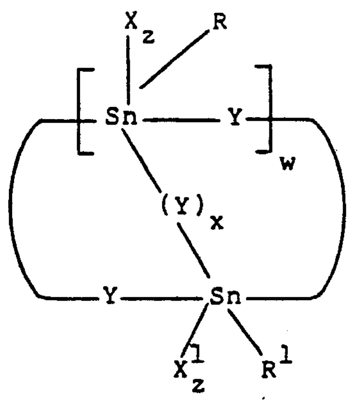 (V)

wherein

X and $X^1$ are the same or different and are selected from $-SR^2$,

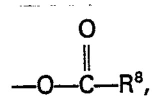,

and $O-R^8$ with the proviso that in formula (V) when z = 1 and in formulae (III) and (IV) at least one X or $X^1$ is $-SR^2$;

Y is 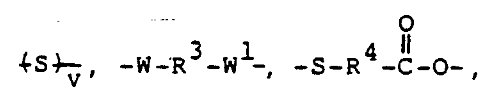

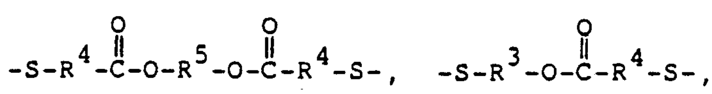

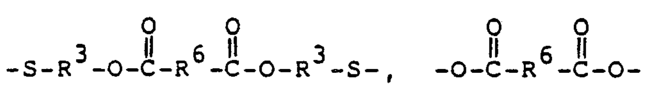 or

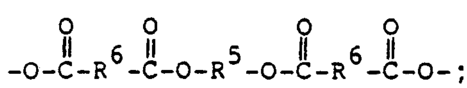

W and $W^1$ are the same or different and are oxygen or sulfur;

Z is 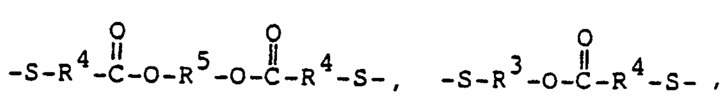

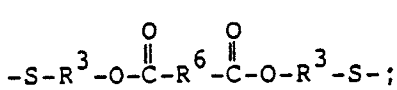

R and $R^1$ are the same or different and are selected from alkyl, aryl, alkenyl, aralkyl, alkaryl, cycloalkyl, cycloalkenyl,

$$-R^9-\overset{\overset{O}{\|}}{C}-R^8,\quad -R^9-\overset{\overset{O}{\|}}{C}-O-R^{12},\quad -R^9-O-\overset{\overset{O}{\|}}{C}-R^8,\quad R^{21}-\overset{\overset{O}{\|}}{C}-CH-\overset{\overset{O}{\|}}{C}-R^{13}$$

$$-R^9-O-R^{12}, \text{ and } R^9-CN;$$

$R^2$ is alkyl, alkenyl, aryl, aralkyl, cycloalkyl, cycloalkenyl,

$$-R^3-O-\overset{\overset{O}{\|}}{C}-R^8,\quad -R^4-O-\overset{\overset{O}{\|}}{C}-R^4-\overset{\overset{O}{\|}}{C}-O-R^8,\quad -R^3-S-R^7,\quad \text{or}\quad -R^3-O-R^8;$$

$R^3$ is alkylene of at least 2 carbon atoms, arylene, alkenylene of at least 2 carbon atoms, cycloalkylene, or cycloakenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$q = 0$ or an integer from 1 to 4 inclusive;

$v =$ an integer from 1 to 8 inclusive; and

$w = 0, 1$ or $2$, $x = 0$ or $1$, $z = 0$ or $1$ with the proviso that when $x = 0$ then $z = 1$, when $x = 1$ then $z = 0$ and $w = 1$, when $w = 2$ then $x = 0$ and $z = 1$, and when $w = 0$ then $x = 0$, $z = 1$ and Y is $—W—R^3—W^1—$ or

$$—S—R^4\overset{\overset{O}{\|}}{C}O—.$$

As used herein the term alkyl represents monovalent straight or branched chain hydrocarbon radicals containing, for example, 1 to 20 carbon atoms. The term aryl refers to monovalent $C_6—C_{10}$ aromatic rings such as benzene and naphthalene. The term alkenyl refers to monovalent straight or branched chain $C_2$ to $C_{20}$ hydrocarbon radicals containing at least one double bond. The term aralkyl represents a monovalent $C_1$ to $C_{20}$ hydrocarbon radical having attached thereto an aryl radical. The term alkaryl refers to monovalent aryl radicals having attached thereto at least one $C_1—C_{20}$ alkyl group. The term cycloalkyl represents monovalent $C_3—C_8$ saturated cycloaliphtic radicals, and the term cycloalkenyl represents $C_5—C_8$ cycloaliphatic radicals containing at least one double bond.

The preferred mono-organotin compounds useful in this invention are those compounds according to formula (I) where R is a methyl, butyl or octyl and W is sulfur; those compounds according to formula (II) where $R^1$ is methyl or butyl, W is sulfur, X is $—SR^2$ where $R^2$ is

$$—R^3O\overset{\overset{O}{\|}}{C}R^8;$$

those compounds according to formula (IIa) where R and $R^1$ are methyl, butyl, octyl or

$$—R^9—\overset{\overset{O}{\|}}{C}—OR^{12};$$

W and $W^1$ are oxygen or sulfur; and

$$Z \text{ is } -S-R^3-O-\overset{\overset{O}{\|}}{C}-R^6-\overset{\overset{O}{\|}}{C}-O-R^3-S-,$$

$$-S-R^3-O-\overset{\overset{O}{\|}}{C}-R^4-S- \quad\text{or}\quad -S-R^4-\overset{\overset{O}{\|}}{C}-O-R^5-O-\overset{\overset{O}{\|}}{C}-R^4-S-;$$

those compounds according to formula (III) where R is methyl or butyl, X is $-SR^2$ where $R^2$ is

$$-R^3O\overset{\overset{\displaystyle O}{\|}}{C}R^8;$$

those compounds according to formula (IV) where R is methyl, X is $-SR^2$ where $R^2$ is

$$-R^3O\overset{\overset{\displaystyle O}{\|}}{C}R^8,$$

$R^1$ is methyl, $X^1$ is $-SR^2$ where $R^2$ is

$$-R^3O\overset{\overset{\displaystyle O}{\|}}{C}R^8,$$

Y is —S—, and q = 0; and those compounds according to formula (V) where R is methyl, X is $-SR^2$ where $R^2$ is

$$-R^3O\overset{\overset{\displaystyle O}{\|}}{C}R^8,$$

$R^1$ is methyl, $X^1$ is $-SR^2$ where $R^2$ is

$$-R^3O\overset{\overset{\displaystyle O}{\|}}{C}R^8,$$

Y is —S—, w = 1, x = 0, and z = 1.

Examples of mono-organotin compounds which are useful in this invention include, but are not limited to, those illustrated in Tables I—IV below. Thus, representative of the mono-organotin compounds described by formulae (I) and (II) are those illustrated in Table I below.

Examples of the mono-organotin compounds described by formula (IIa) are those illustrated in Table Ia below.

Examples of the mono-organotin compounds represented by formula (III) are illustrated in Table II below.

The mono-organotin compounds illustrated in Table III below are representative of compounds described by formula (IV).

The mono-organotin compounds illustrated in Table IV below is representative of compounds described by formula (V).

TABLE I

(I) 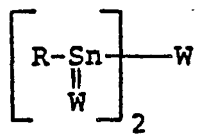 ,

(II) 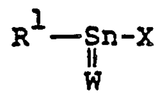 ,

| Mono-organo-tin Compound No. | R | $R^1$ | W | X |
|---|---|---|---|---|
| 1 | $-C_4H_9$ | - | S | - |
| 2 | $-C_8H_{17}$ | - | O | - |
| 3 | - | $-CH_3$ | S | 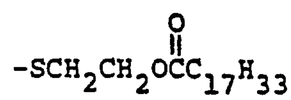 |

TABLE Ia

(IIa) 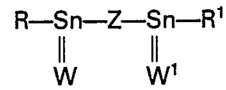

| Mono-organotin Compound No. | R and R[1] | W | W[1] | Z |
|---|---|---|---|---|
| a | $—CH_3$ | S | S | 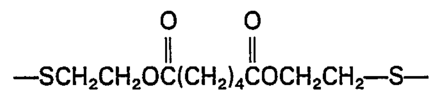 |
| b | $—C_4H_9$ | S | S | 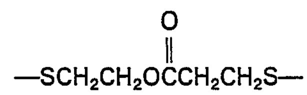 |
| c | $—C_8H_{17}$ | O | S | 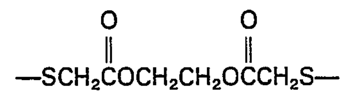 |
| d | 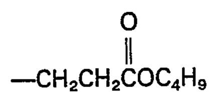 | S | S | 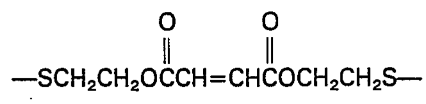 |
| e | $—CH_3$ | S | S | 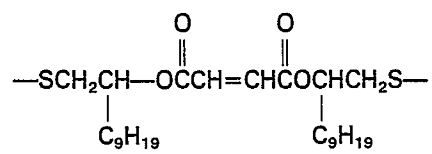 |
| f | $—C_4H_9$ | S | S | 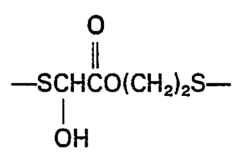 |
| g | $—C_4H_9$ | O | O | 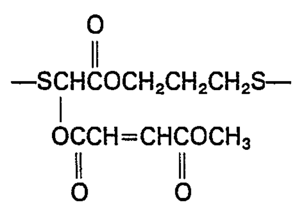 |
| h | $—CH_3$ | S | S | 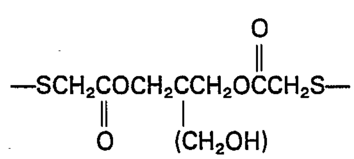 |
| i | $—CH_3$ | S | S | 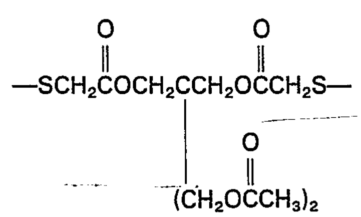 |

TABLE II

(III) $R—Sn-X_3$ ,

| Mono-organo-tin Compound No. | R | X |
|---|---|---|
| 5 | $-C_4H_9$ | $-SCH_2CH_2OC(=O)C_7H_{15}$ |

TABLE III

(IV) 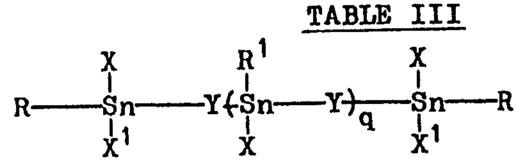

| Mono-organo-tin compound No. | R and $R^1$ | X | $X^1$ | Y | q |
|---|---|---|---|---|---|
| 6 | $-CH_3$ | $-SCH_2CH_2O\overset{O}{C}C_{11}H_{23}$ | Same as X | -S- | 0 |
| 7 | $-CH_3$ | $-SCH_2CH_2O\overset{O}{C}C_{17}H_{33}$ | do | $-SCH_2\overset{O}{C}OC_4H_8O\overset{O}{C}CH_2S-$ | 1 |
| 8 | $-CH_3$ | $-SCH_2CH_2O\overset{O}{C}CH{=}CH\overset{O}{C}OCH_3$ | do | -S- | 0 |
| 9 | $-C_4H_9$ | $-SCH_2CH_2O\overset{O}{C}C_8H_{17}$ | Same as X | $-S-CH_2\overset{O}{C}O-$ | 0 |
| 10 | $-CH_3$ | $-SCH_2CH_2O\overset{O}{C}C_{11}H_{23}$ | do | -S- | 0 |
| 11 | $-C_4H_9$ | $-SCH_2CH_2O\overset{O}{C}C_7H_{15}$ | do | 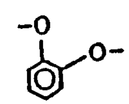 | 0 |

TABLE IV

(V) 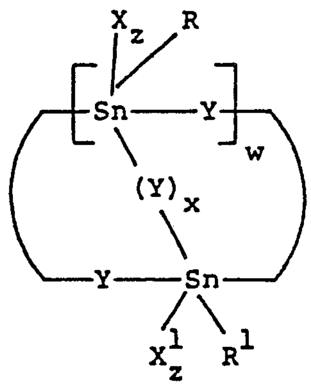

| Mono-organotin Compound No. | R and $R^1$ | X and $X^1$ | Y | w | x | z |
|---|---|---|---|---|---|---|
| 12 | $-CH_3$ | 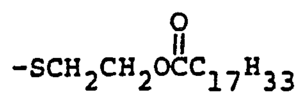 | -S- | 1 | 0 | 1 |

As used in Tables I—IV above, and throughout this specification, the radicals $—C_4H_9$, $—C_8H_{17}$, $—C_{12}H_{25}$, $—C_9H_{19}$ and $—C_{10}H_{21}$ represent n-butyl, n-octyl, n-dodecyl, n-nonyl and n-decyl respectively.

The carboxyl radicals

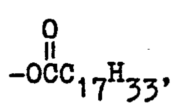, 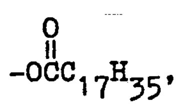, 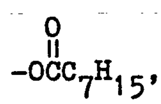, 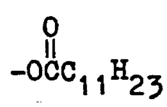 and 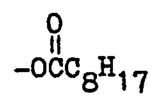

are derived from oleic acid, stearic acid, n-octanoic acid, lauric acid, and pelargonic acid respectively.

The mercaptan-containing organic compounds useful in this invention include hydrocarbyl mercaptans, mercapto esters, mercapto alcohols, and mercapto acids. These mercaptan-containing organic compounds have structures illustrated by the following formulae:

(VI) 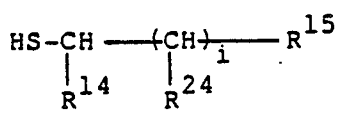,

(VII) 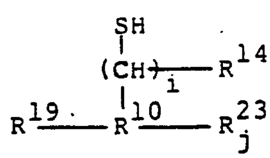

(VIIa) 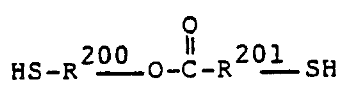

(VIII) 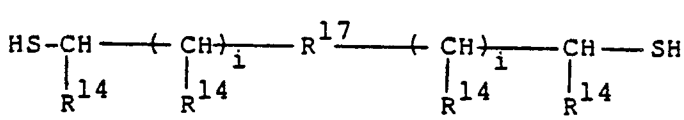,

(IX) 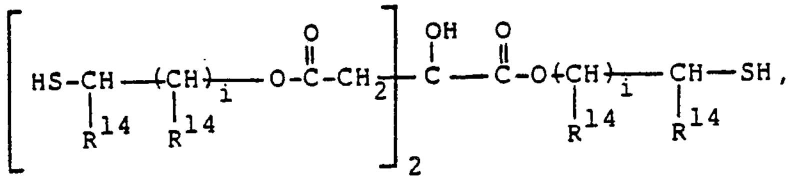

(X) 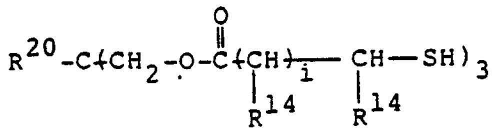, and

(XI) 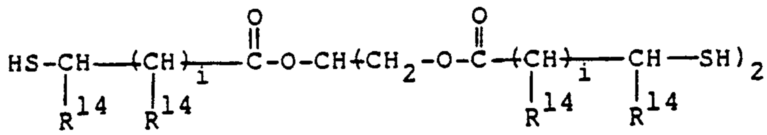

where

$R^{10}$ is cycloalkyl, cycloalkenyl or phenyl;

$R^{14}$ is —H, aryl, or $C_1$ to $C_{18}$ alkyl;

$R^{15}$ and $R^{24}$ are the same or different and are

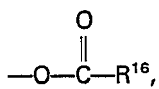,

—OH, —SH, aryl $C_1$ to $C_{18}$ alkyl, or —H;

$R^{16}$ is —H or $R^8$;

$R^{17}$ is 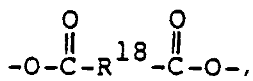, or 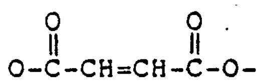;

$R^{18}$ is arylene, $C_1$ to $C_{18}$ alkylene, or

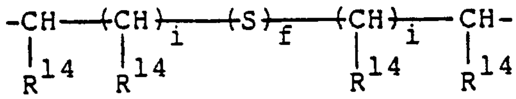

$R^{19}$ is —H or a divalent group which may contain halogen, hydroxy, mercapto or alkyl substituents and which when $R^{10}$ is phenyl combines with the phenyl to form a naphthalene ring;

$R^{20}$ is $-CH_3$, $-CH_2CH_3$, or 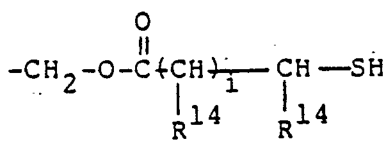;

$R^{23}$ is 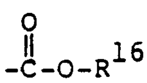, 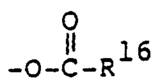, -SH,

aryl, $C_1$ to $C_{18}$ alkyl, —OH or —H with the proviso that in formula (VII) when $R^{10}$ is phenyl, $R^{23}$ is —OH and i=0, then the —OH and —SH groups are on non-adjacent carbon atoms;

$R^{200}$ and $R^{201}$ are the same or different and are alkylene, alkenylene, arylene, cycloalkylene or cycloalkenylene; or alkylene alkenylene, arylene, cycloalkylene or cycloalkenylene each substituted with one or two —R, —O—$R^7$, —$R^9$—O—$R^7$,

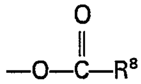 or 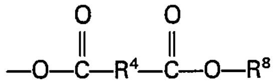 groups;

R, $R^7$, $R^8$, $R^4$ and $R^9$ are as previously defined;
i=0 or an integer from 1 to 6 inclusive;
j=0, 1, 2 or 3; and
f=1 or 2;

with the proviso that 1) when a mono-organotin compound according to formula (I) is employed, then the mercaptan-containing organic compounds are selected from compounds having formula VI where $R^{15}$ and $R^{24}$ are the same or different and are —OH, —SH, aryl, $C_1$ to $C_{18}$ alkyl or —H; and $R^{14}$ and i are as previously defined; compounds having formula VII where $R^{23}$ is

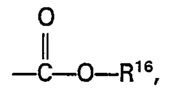

—SH, aryl, $C_1$ to $C_{18}$ alkyl, —OH, or —H; and $R^{14}$, i, $R^{10}$, $R^{19}$ and j are as previously defined; and compounds having formulae VIII, IX, X and/or XI; and 2) when a mono-organotin compound according to formulae II, III, IV or V wherein X is —$SR^2$ and $R^2$ is alkyl, alkenyl, aryl, aralkyl, cycloalkyl or cycloalkenyl is employed, then the mercaptan-containing organic compounds are selected from compounds having formula VI where when either $R^{15}$ or $R^{24}$ is —OH, then the —SH and —OH groups are separated by at least 3 carbon atoms; compounds having formula VII where when $R^{23}$ is OH, then the —SH and —OH groups are separated by at least 3 carbon atoms; and/or compounds having formulae VIIa, VIII, IX, X and/or XI.

The mercaptan-containing organic compounds useful in this invention are well-known compounds (see, for example, U.S. Patents No. 3,503,924 and 3,507,827).

The preferred mercaptan-containing organic compounds useful in this invention are those compounds according to formula (VI) where $R^{14}$ is —H, $R^{24}$ is —H, $R^{15}$ is

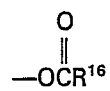

and i=1; those compounds according to formula (VII) where $R^{10}$ is phenyl, $R^{14}$ is —H, $R^{23}$ is —H, $R^{19}$ is —H, i=1 and j=1; those compounds according to formula (VIIa) where $R^{200}$ is —$CH_2CH_2$— or

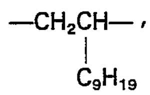

and $R^{201}$ is —$CH_2$— or

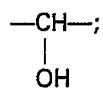

those compounds according to formula (VIII) where $R^{14}$ is —H, $R^{17}$ is

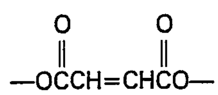

and i=1; those compounds according to formula (IX) where $R^{14}$ is —H and i=1; those compounds according to formula (X) where $R^{20}$ is —$C_2H_5$ or

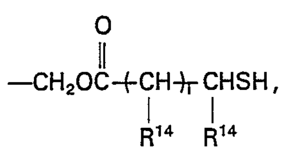

$R^{14}$ is —H and i=1; and those compounds according to formula (XI) where $R^{14}$ is —H and i=1.

Examples of the mercaptan-containing organic compounds described by formula (VI) include, but are not limited to, the following compounds:

$HSC_{12}H_{25}$

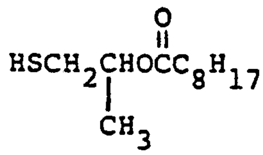

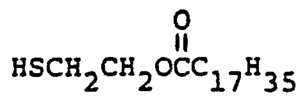

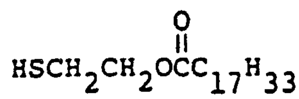

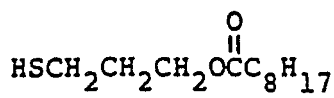

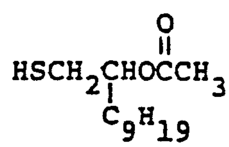

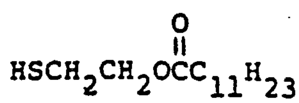

$HSCH_2CH_2OH$

$HSCH_2CH_2CH_2OH$

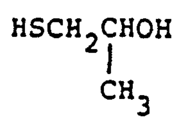

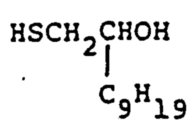

Examples of the mercaptan-containing organic compounds described by formula (VII) include, but are not limited to, the following compounds:

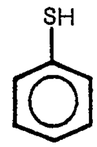

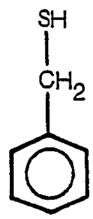

The mercaptan-containing organic compounds represented by formula (VIIa) are exemplified by, but are not limited to, the following:

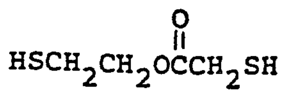

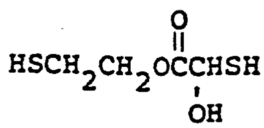

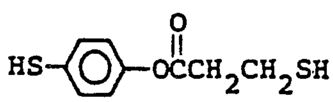

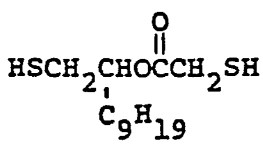

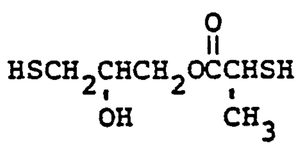

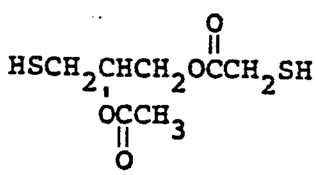

Examples of mercaptan-containing organic compounds represented by formula (VIII) include, but are not limited to, the following compounds:

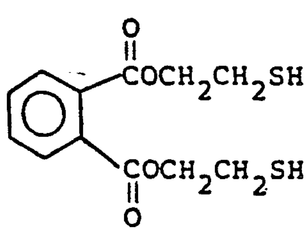

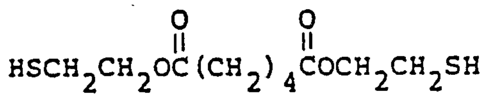

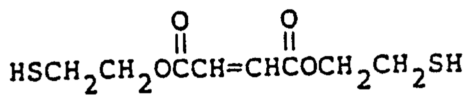

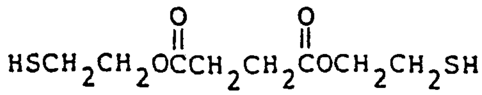

An example of the mercaptan-containing organic compounds described by formula (IX) includes, but is not limited to, the following:

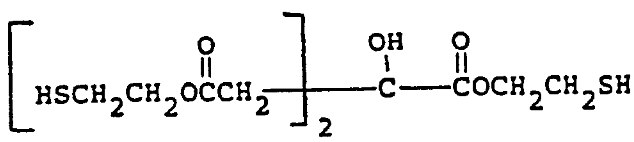

The mercaptan-containing organic compounds represented by formula (X) are exemplified by, but are not limited to, the following:

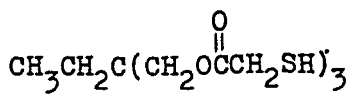

The mercaptan-containing organic compounds represented by formula (XI) are exemplified by, but are not limited to, the following:

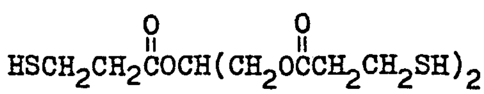

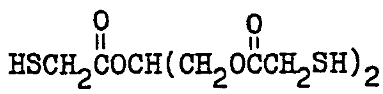

The diorganotin compounds useful in the practice of this invention contain one or more tetravalent tin atoms, at least one of which has direct bonds to two carbon atoms and have structures selected from the following formulae:

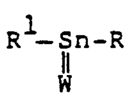 , (XII)

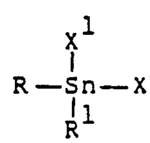 , (XIII)

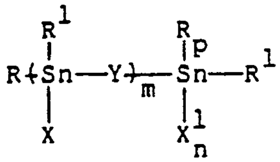 (XIV) and

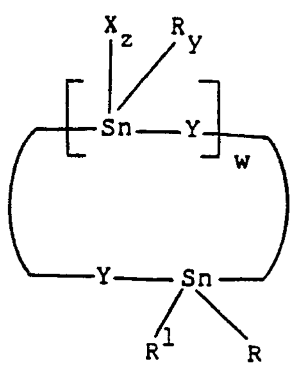 (XV)

wherein

R, $R^1$, W, X, $X^1$, Y, w and z are as previously defined;
n=0, 1 or 2, p=0, 1 or 2 with the proviso that n+p=2, and m=1 to 5;
y=1 or 2, y+z=2 with the proviso that when w=0 then Y is $-W-R^3-W^1$, or

$$-SR^4\overset{\overset{O}{\|}}{C}O-;$$

and in formula (XV) when z=1 and in formulae (XIII) and (XIV) at least one X or $X^1$ is $-SR^2$.

The mono-organotin compounds and diorganotin compounds useful in this invention may be prepared by methods well known in the art. See, for example, U.S. Patents Nos. 3,565,930, 3,869,487, 3,979,359, 4,118,371, 4,134,878 and 4,183,846.

The preferred diorganotin compounds used in the practice of this invention are those compounds according to formula (XII) where R is methyl or butyl, $R^1$ is methyl or butyl and W is sulfur; those compounds according to formula (XIII) where R is methyl or butyl, $R^1$ is methyl or butyl, X is $-SR^2$ where $R^2$ is

$$-R^3O\overset{\overset{O}{\|}}{C}R^8;$$

and $X^1$ is $-SR^2$ where $R^2$ is

$$-R^3O\overset{\overset{O}{\|}}{C}R^8;$$

those compounds according to formula (XIV) where R is methyl or butyl, $R^1$ is methyl or butyl, Y is —S—, X is $-SR^2$ where $R^2$ is

$$-R^3O\overset{\overset{O}{\|}}{C}R^8,$$

$X^1$ is $-SR^2$ where $R^2$ is

$$-R^3O\overset{\overset{O}{\|}}{C}R^8,$$

m=1, n=2 and p=0, and those compounds according to formula (XV) where R is methyl or buty, $R^1$ is methyl or butyl, X is $-SR^2$ where $R^2$ is

$$-R^3O\overset{\overset{O}{\|}}{C}R^8,$$

Y is —S—, w=1, y=1 and z=1.

Examples of diorganotin compounds according to formula (XII) include, but are not limited to, the compounds illustrated in Table V below.

TABLE V

(XII) $$R^1-\underset{\underset{W}{\|}}{Sn}-R\ ,$$

| Diorganotin Compound | R | $R^1$ | W |
|---|---|---|---|
| A | $-C_4H_9$ | $-C_4H_9$ | S |
| B | $-C_8H_{17}$ | $-C_8H_{17}$ | O |

Examples of diorganotin compounds according to formula (XIII) include, but are not limited to, the compounds in Table VI below.

TABLE VI

(XIII) 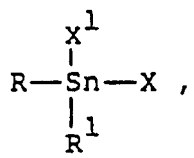

| Diorganotin Compound | R | $R^1$ | X and $X^1$ |
|---|---|---|---|
| C | $-CH_2CH_2\overset{O}{\overset{\|}{C}}OC_4H_9$ | Same as R | $-SCH_2CH_2O\overset{O}{\overset{\|}{C}}CH_3$ |
| D | $-CH_3$ | do | $-SCH_2CH_2O\overset{O}{\overset{\|}{C}}C_{17}H_{35}$ |

Examples of diorganotin compounds according to formula (XIV) include, but are not limited to, the compounds in Table VII below.

TABLE VII

(XIV) 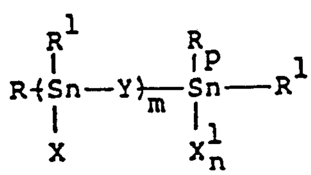

| Diorganotin Compound | R and $R^1$ | X | $X^1$ | Y | n | p | m |
|---|---|---|---|---|---|---|---|
| E | $-CH_3$ | $-SCH_2\overset{O}{\overset{\|}{C}}OC_{13}H_{27}$ | Same as X | -S- | 1 | 1 | 1 |
| F | $-C_4H_9$ | $-SCH_2CH_2O\overset{O}{\overset{\|}{C}}C_8H_{17}$ | do | -S- | 1 | 1 | 1 |

Examples of diorganotin compounds according to formula (XV) include, but are not limited to, the compounds in Table VIII below.

TABLE VIII

(XV) 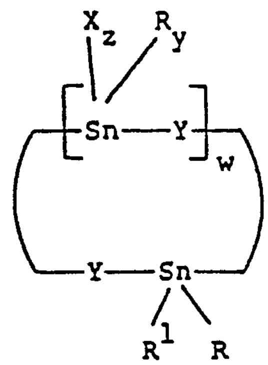

| Diorganotin Compound | R | $R^1$ | X | Y | w | y | z |
|---|---|---|---|---|---|---|---|
| G | $-C_4H_9$ | $-C_4H_9$ | $-SCH_2CH_2\overset{O}{\overset{\|}{C}}OC_8H_{17}$ | -S- | 1 | 1 | 1 |

It should be noted that, in an effort to simplify the foregoing formulae I—XV and render them as clear and concise as possible, some letters are used more than once in the same formula and/or in more than one formula. Thus, for example, $R^1$ appears twice in formula XIV and also in formulas II, IIa, IV, V, XII, XIII and XV. It is intended that, in those instances where the same letter is used either more than once in the same formula or in more than one formula, that letter represents at each independent occurrence any group contained in the set of groups encompassed by its definition, or any and all subsets thereof. It is further intended that any modification or limitation in the definition of a particular letter at one occurrence does not necessarily affect its definition at any other occurrence. For example, should the definition of X in formula II be limited from $—SR^2$,

$$—O\overset{O}{\overset{\|}{C}}R^8$$

or $—OR^8$ to $—SR^2$–, then X in each of formulae III, IV, V, XIII, XIV, and XV may still represent at each independent occurrence the set of groups consisting of $—SR^2$,

$$—O\overset{O}{\overset{\|}{C}}R^8$$

and $—OR^8$, or any and all subsets thereof such as, for example, $—SR^2$ and

$$—O\overset{O}{\overset{\|}{C}}R^8$$

and $—OR^8$.

In another embodiment of this invention, the stabilizer compositions comprise: A) a mono-organotin compound or mixture of mono-organotin compounds selected from compounds having formulae II, III, IV and/or V wherein at least one X or $X^1$ is $—SR^2$ and $R^2$ is alkyl, alkenyl, aryl, aralkyl, cycloalkyl or cycloalkenyl, B) a mercaptan-containing organic compound or mixture of mercaptan-containing organic compounds selected from compounds having formula VI where either $R^{15}$ or $R^{24}$ is —OH, then the —SH and —OH groups are separated by at least 3 carbon atoms; compounds having formula VII where when $R^{23}$ is —OH, then the —SH and —OH groups are separated by at least 3 carbon atoms; and/or compounds having formulae VIII, IX, X and/or XI; and, C) a diorganotin compound or mixture of diorganotin compounds selected from compounds having formulae XII, XIII, XIV and/or XV defined above.

In a further embodiment of this invention, the stabilizer compositions comprise: A) a mono-organotin compound or mixture of mono-organotin compounds selected from compounds having formula (I), B) a mercaptan-containing compound or mixture of mercaptan-containing compounds selected from

compounds having formula VI where $R^{15}$ and $R^{24}$ are the same or different and are —OH, —SH, aryl, $C_1$ to $C_{18}$ alkyl, —OH or —H; compounds having formula VII where $R^{23}$ is

$$-\overset{O}{\overset{\|}{C}}-O-R^{16},$$

—SH, aryl, $C_1$ to $C_{18}$ alkyl, —OH, or —H; and/or compounds having formulae VIII, IX and/or XI; and optionally, C) a diorganotin compound or mixture of diorganotin compounds selected from compounds having formulae XII, XIII, XIV and/or XV.

In another embodiment of this invention, the stabilizer compositions comprise: A) a mono-organotin compound or mixture of mono-organotin compounds selected from compounds having formula IIa; B) a mercaptan-containing compound or mixture of mercaptan-containing compounds selected from compounds having formulae VI, VII, VIII, IX, X and/or XI: and, C) a diorganotin compound or mixture of diorganotin compounds selected from compounds having formulae XII, XIII, XIV and/or XV.

In an additional embodiment of this invention, the stabilizer compositions comprise: A) a mono-organotin compound of mixture of mono-organotin compounds selected from compounds having formulae II, IIa, III, IV and/or V; B) a mercaptan-containing organic compound or mixture of mercaptan-containing organic compounds selected from compounds having formula VIIa; and, C) a diorganotin compound or mixture of diorganotin compounds selected from compounds having formulae XII, XIII, XIV and/or XV.

The stabilizer compositions of this invention may be prepared by blending the components thereof in any convenient manner which produces a homogeneous mixture, such as by shaking or stirring in a container. Likewise, the stabilizer compositions of this invention can be incorporated into the halogen-containing organic polymer by admixing the stabilizer composition and polymer, such as, for example, in an appropriate mill or mixer or by any other of the well-known methods which provide uniform, distribution of the stabilizer throughout the polymer.

As previously stated, the stabilizer compositions of the present invention comprise 1) a mono-organotin compound or mixture of mono-organotin compounds, 2) a mercaptan-containing organic compound or mixture of mercaptan-containing compounds, and, 3) a diorganotin compound or mixture of diorganotin compounds. More particularly, the stabilizer compositions of this invention comprise from about 10% to about 60% by weight, preferably about 20% to about 40% by weight mercaptan-containing organic compound or mixture of mercaptan-containing organic compounds, based on the total weight of the stabilizer composition, the balance of the stabilizer composition comprising a mono-organotin compound or mixture of mono-organotin compounds, and, a diorganotin compound or mixture of diorganotin compounds. The diorganotin compound or mixture of diorganotin compounds may comprise from 0.05% to 75% by weight, preferably from 0.05% to 35% by weight of the total weight of the stabilizer composition.

The stabilizer compositions of this invention are employed in an amount sufficient to impart the desired resistance to heat deterioration to halogen-containing organic polymers. It will be readily apparent to one of ordinary skill in the art, that the precise amount of stabilizer composition used will depend upon several factors, including, but not limited to, the particular halogen-containing organic polymer employed, the temperature to which the polymer will be subjected, and the possible presence of other stabilizing compounds. In general, the more severe the conditions to which the halogen-containing organic polymer is subjected, and the longer the term required for resisting degradation, the greater will be the amount of stabilizer composition required. Generally, as little as about 0.40 parts by weight of the stabilizer composition per hundred parts by weight of halogen-containing organic polymer will be effective. While there is no critical upper limit to the amount of stabilizer composition which can be employed, amounts in excess of about 10 parts by weight of stabilizer composition per hundred parts by weight of halogen-containing organic polymer do not give an increase in effectiveness commensurate with the additional amount of stabilizer employed.

The articles of manufacture contemplated by this invention are produced from the stabilized polymer compositions according to this invention. These articles of manufacture, e.g. pipe, may be formed from said stabilized polymer compositions by any of the well-known, conventional techniques for forming polymers into shaped articles of manufacture.

The following examples illustrate this invention. Unless otherwise indicated, all parts and percentages in the examples and throughout this specification are by weight.

Example 1

A mixture is prepared by dry blending to 110°C in a Henschel high intensity mixer (Model 2JSS) 100.0 parts of polyvinyl chloride (Geon 103EP-F-76 available commercially from B.F. Goodrich Chemical Company) with 3.0 parts of fine particle size calcium carbonate coated with calcium stearate, 1.0 part of titantium dioxide, 1.2 parts of paraffin wax (ADVAWAX® 165 paraffin wax available commercially from Carstab Corporation), 0.60 part of calcium stearate, 0.15 part of an oxidized low molecular weight ethylene homopolymer (AC629A available commercially from Allied Chemical Corporation), and the stabilizer

composition listed in Table A in the amounts indicated in Table A, said amounts being parts by weight of stabilizer per hundred parts polyvinyl chloride. The resulting mixture is masticated on a two-roll mill at about 193°C. Samples are taken at one minute intervals beginning after the first introduction of the mix to the mill.

The appearance of each sample taken from the mill is evaluated using the following scale:

| 10 | 9 | 8 | 7 | 6 | 5 | 4 | 3 | 2 | 1 | 0 |
|---|---|---|---|---|---|---|---|---|---|---|

white ⟶ Tan-Orange ⟶ Burn

The results of these tests are indicated in Table A.

TABLE A

| Example No. | Stabilizer Composition | Parts By Weight | Minutes of Milling | | | | | | | | | |
|---|---|---|---|---|---|---|---|---|---|---|---|---|
| | | | 1 | 2 | 3 | 4 | 5 | 6 | 7 | 8 | 9 | 10 |
| | | | COLOR | | | | | | | | | |
| 1 | Mixture of equal wt. proportions of mono-organotin Cmpd.No. 1 from Table I and diorganotin Cmpd. D from Table VI | 0.30 | | | | | | | | | | |
| | $HSCH_2CH_2CH_2O\overset{\overset{O}{\|}}{C}C_8H_{17}$ | 0.03 | 9+ | 9 | 8 | 7 | 7 | 5 | 4 | 3 | 2 | 0 |

Examples 2-7

The stabilizer compositions indicated in Table B below are tested in the same manner and with substantially equivalent results as the stabilizer composition of Example 1.

TABLE B

| Example No. | Stabilizer Composition | Parts By Weight |
|---|---|---|
| 2 | Mixture of equal wt. proportions of mono-organotin Cmpd. No. 1 from Table I and diorganotin Cmpd. D from Table VI | 0.30 |
| | $HSCH_2CH_2CH_2O\overset{\overset{O}{\|}}{C}C_8H_{17}$ | 0.10 |
| 3 | Mixture of equal wt. proportions of mono-organotin Cmpd. No. 1 from Table I and diorganotin Cmpd. D from Table VI | 0.30 |
| | $HSCH_2CH_2OH$ | 0.10 |
| 4 | Mixture of equal wt. proportions of mono-organotin Cmpd. No. 1 from Table I and diorganotin Cmpd. D from Table VI | 0.30 |
| | $HSCH_2COOH$ | 0.05 |
| 5 | $C_4H_9Sn(SC_{12}H_{35})_3$ | 0.50 |
| | $HSCH_2CH_2O\overset{\overset{O}{\|}}{C}C_{17}H_{35}$ | 0.15 |
| | Diorganotin cmpd. F from Table VII | 0.10 |
| 6 | Mono-organotin cmpd. No. 4b from Table Ia | 0.35 |
| | $HSCH_2CH_2O\overset{\overset{O}{\|}}{C}(CH_2)_4\overset{\overset{O}{\|}}{C}OCH_2CH_2SH$ | 0.05 |
| | Diorganotin cmpd. B from Table V | 0.02 |
| 7 | Mono-organotin cmpd. No. 4c from Table Ia | 0.375 |
| | 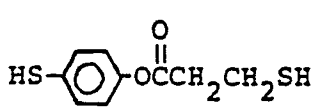 | 0.20 |
| | Diorganotin cmpd. C from Table VI | 0.25 |

## Claims

1. A 3-component stabilizer composition for polymers comprising a product produced by blending first and second organotin components (A, C) and an organic mercaptan component (B), characterised in that the first organotin component comprises:

(A) a mono-organotin compound or mixture of mono-organotin compounds selected from compounds having the general formulae:

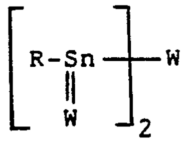 , (I)

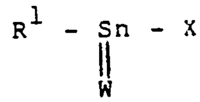 , (II)

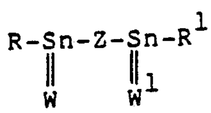 (IIa)

$R - Sn - X_3$ (III)

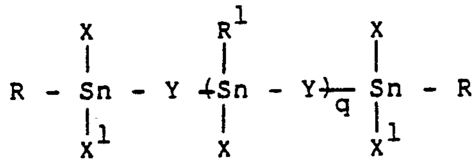 and

(IV)

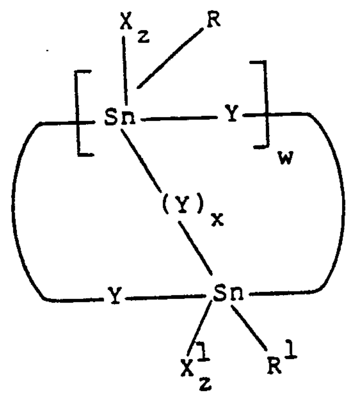 (V)

wherein

X and $X^1$ are the same or different and are selected from $-SR^2$,

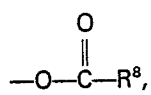

and $O-R^8$ with the proviso that in formula (V) when z = 1 and in formulae (III) and (IV) at least one X or $X^1$ is $-SR^2$;

Y is

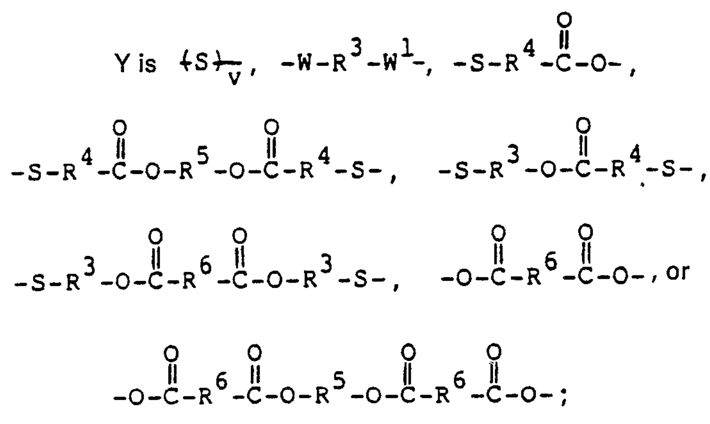

W and $W^1$ are the same or different and are oxygen or sulfur;

Z is

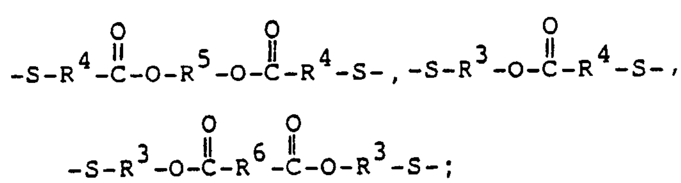

R and $R^1$ are the same or different and are selected from alkyl, aryl, alkenyl, aralkyl, alkaryl, cycloalkyl, cycloalkenyl

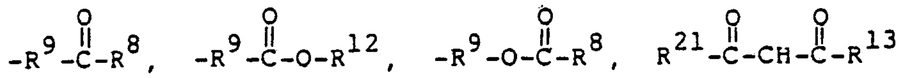

$-R^9-O-R^{12}$, and $R^9-CN$;

$R^2$ is alkyl, alkenyl, aryl, aralkyl, cycloalkyl, cycloalkenyl,

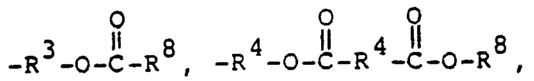, $-R^3-S-R^7$, or $-R^3-O-R^8$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkenylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

q = 0 or an integer from 1 to 4 inclusive;

v = an integer from 1 to 8 inclusive; and

w = 0, 1 or 2, x = 0 or 1, z = 0 or 1 with the proviso that when x = 0 then z = 1, when x = 1 then z = 0 and w = 1, when w = 2, then x = 0 and z = 1 and when w = 0 then x = 0, z = 1 and Y is $—W—R^3—W^1—$ or

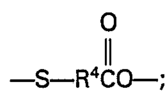;

the organic mercaptan component comprises

(B) a synergistically effective amount of a mercaptan-containing organic compound or mixture of mercaptan-containing organic compounds selected from compounds having the general formulae:

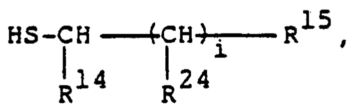 (VI)

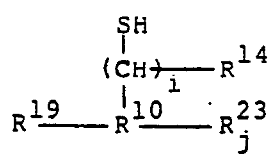 (VII)

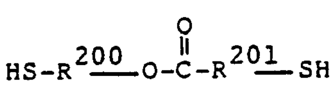 (VIIa)

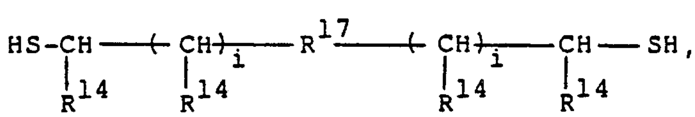 (VIII)

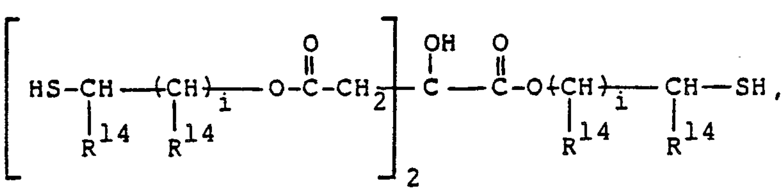 (IX)

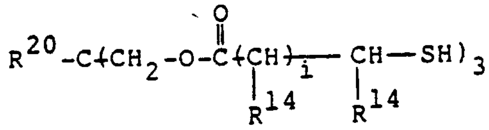 , and (X)

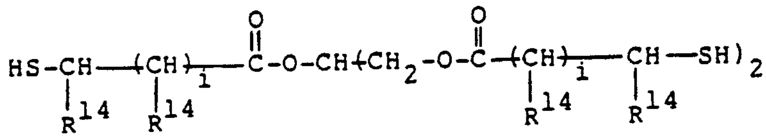 (XI)

where

$R^{10}$ is cycloalkyl, cycloalkenyl or phenyl;

$R^{14}$ is —H, aryl, or $C_1$ to $C_{18}$ alkyl;

$R^{15}$ and $R^{24}$ are the same or different and are

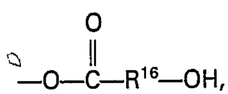

—SH, aryl, $C_1$ to $C_{18}$ alkyl, or —H;

$R^{16}$ is —H or $R^8$;

$R^{17}$ is 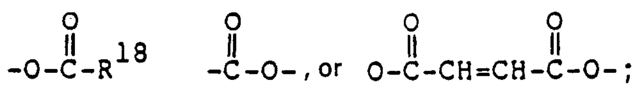 , or ;

$R^{18}$ is arylene, $C_1$ to $C_8$ alkylene, or

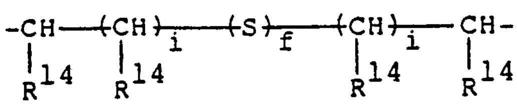

$R^{19}$ is —H or a divalent group which may contain halogen, hydroxy, mercapto or alkyl substituents and which when $R^{10}$ is phenyl combines with the phenyl to form a naphthalene ring;

$R^{20}$ is $-CH_3$, $-CH_2CH_3$, or 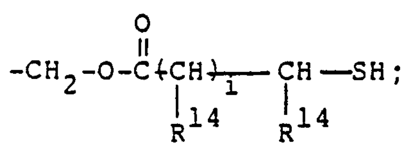 ;

$R^{23}$ is 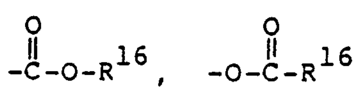 , , -SH,

aryl, $C_1$ to $C_{18}$ alkyl, —OH or —H with the proviso that in formula (VII) when $R^{10}$ is phenyl, $R^{23}$ is —OH and i = 0, then the —OH and —SH groups are on non-adjacent carbon atoms;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two —R, —O—$R^7$, —$R^9$—O—$R^7$,

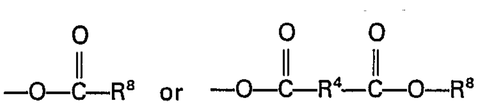 or groups;

R, $R^7$, $R^8$, $R^4$ and $R^9$ are as previously defined;

i = 0 or an integer from 1 to 6 inclusive;

j = 0, 1, 2 or 3; and

f = 1 or 2;

with the proviso that 1) when a mono-organotin compound according to formula (I) is employed, then the

mercaptan-containing organic compounds are selected from compounds having formula VI where $R^{15}$ and $R^{24}$ are the same or different and are

$$-\overset{\overset{O}{\|}}{C}-O-R^{16},$$

—OH, —SH, aryl, $C_1$ to $C_{18}$ alkyl or —H; and $R_{14}$ and i are as previously defined; compounds having formula VII where $R^{23}$ is

$$-\overset{\overset{O}{\|}}{C}-O-R^{16},$$

—SH, aryl, $C_1$ to $C_{18}$ alkyl, —OH, or —H; and $R^{14}$, i, $R^{10}$, $R^{19}$ and j are as previously defined; and compounds having formulae VIII, IX, X and/or XI; and 2) when a monoorganotin compound according to formulae II, III, IV or V wherein X is $—SR^2$ and $R^2$ is alkyl, alkenyl, aryl, aralkyl, cycloalkyl or cycloalkenyl is employed, then the mercaptan-containing organic compounds are selected from compounds having formula VI where when either $R^{15}$ or $R^{24}$ is —OH, then the —SH and —OH groups are separated by at least 3 carbon atoms; compounds having formula VII where when $R^{23}$ is —OH, then the —SH and —OH groups are separated by at least 3 carbon atoms; and/or compounds having formulae VIIa, VIII, IX, X and/or XI and the second organotin component comprises

(C) a synergistic amount of a diorganotin compound or mixture of diorganotin compounds selected from compounds having the general formulae:

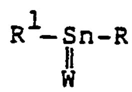 , (XII)

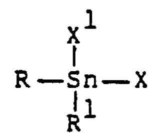 , (XIII)

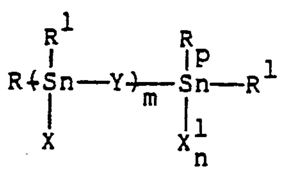 (XIV)

, and

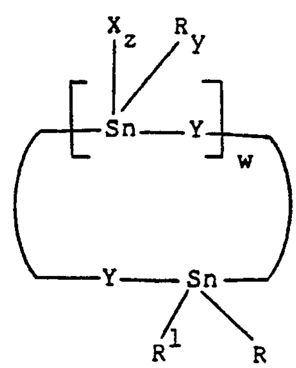 (XV)

wherein

R, $R^1$, W, X, $X^1$, Y, w and z are as previously defined;

n = 0, 1 or 2, p = 0, 1 or 2 with the proviso that n + p = 2, and m = 1 to 5;

y = 1 or 2, y + z = 2 with the proviso that when w = 0 then Y is $—W—R^3—W^1—$, or

$$-SR^4\overset{\overset{O}{\|}}{C}O-;$$

and in formula (XV) when z = 1 and in formulae (XIII) and (XIV) at least one X or $X^1$ is $—SR^2$.

2. The stabilizer composition claimed in claim 1 further characterised in that in general formula (I) R is methyl, butyl or octyl and W is sulfur.

3. The stabilizer composition claimed in claim 1 further characterised in that in general formula (II) $R^1$ is methyl or butyl, W is sulfur, and X is $—SR^2$ where $R^2$ is

$$R^3O\overset{\overset{O}{\|}}{C}R^8.$$

4. The stabilizer composition claimed in claim 1 further characterised in that in general formula (IIa) R and $R^1$ are methyl, butyl, octyl or

$$-R^9-\overset{O}{\overset{\|}{C}}-O-R^{12};$$

W and $W^1$ are oxygen or sulfur; and

$$Z \text{ is } -S-R^3-O-\overset{O}{\overset{\|}{C}}-R^6-\overset{O}{\overset{\|}{C}}-O-R^3-S-,$$

$$-S-R^3-O-\overset{O}{\overset{\|}{C}}-R^4-S- \quad \text{or} \quad -S-R^4-\overset{O}{\overset{\|}{C}}-O-R^5-O-\overset{O}{\overset{\|}{C}}-R^4-S-.$$

5. The stabilizer composition claimed in claim 1 further characterised in that in general formula (III) R is methyl or butyl and X is $-SR^2$ where $R^2$ is

$$-R^3O\overset{O}{\overset{\|}{C}}R^8.$$

6. The stabilizer composition claimed in claim 1 further characterised in that in general formula (IV) R is methyl, X is $-SR^2$ where $R^2$ is

$$-R^3O\overset{O}{\overset{\|}{C}}R^8,$$

$R^1$ is methyl, $X^1$ is $-SR^2$ where $R^2$ is

$$-R^3O\overset{O}{\overset{\|}{C}}R^8,$$

Y is —S— and q = 0.

7. The stabilizer composition claimed in claim 1 further characterised in that in general formula (V) R is methyl, X is $-SR^2$ where $R^2$ is

$$-R^3O\overset{O}{\overset{\|}{C}}R^8,$$

$R^1$ is methyl, $X^1$ is $-SR^2$ where $R^2$ is

$$-R^3O\overset{O}{\overset{\|}{C}}R^8,$$

Y is —S—, w = 1, x = 0 and z = 1.

8. The stabilizer composition claimed in claim 1 further characterised in that in general formula (VI) $R^{14}$ is —H, $R^{24}$ is —R, $R^{15}$ is

$$-O\overset{O}{\overset{\|}{C}}R^{16}$$

and i = 1.

9. The stabilizer composition claimed in claim 1 further characterised in that in general formula (VII) $R^{10}$ is phenyl, $R^{14}$ is —H, $R^{23}$ is —H, $R^{19}$ is —H, i = 1 and j = 1.

10. The stabilizer composition claimed in claim 1 further characterised in that in general formula (VIIa) $R^{200}$ is $-CH_2CH_2-$ or

$$-CH_2\underset{C_9H_{19}}{\underset{|}{C}}H- \quad ,$$

and $R^{201}$ is $-CH_2-$ or

$$-\underset{OH}{\underset{|}{C}}H \quad .$$

11. The stabilizer composition claimed in claim 1 further characterised in that in general formula (VIII) where $R^{14}$ is $-H$, $R^{17}$ is

$$\overset{O}{\overset{\|}{O C}}CH{=}CH\overset{O}{\overset{\|}{C}}O-$$

and $i = 1$.

12. The stabilizer composition claimed in claim 1 further characterised in that in general formula (IX) $R^{14}$ is $-H$ and $i = 1$.

13. The stabilizer composition claimed in claim 1 further characterised in that in general formula (X) $R^{20}$ is $-C_2H_5$ or

$$-CH_2O\overset{O}{\overset{\|}{C}}-(CH)_i-\underset{R^{14}}{\underset{|}{C}}HSH \quad ,$$

$R^{14}$ is $-H$ and $i = 1$.

14. The stabilizer composition claimed in claim 1 further characterised in that in general formula (XI) $R^{14}$ is $-H$ and $i = 1$.

15. The stabilizer composition claimed in claim 1 further characterised in that in general formula (XII) R is methyl or butyl, $R^1$ is methyl or butyl, and W is sulfur.

16. The stabilizer composition claimed in claim 1 further characterised in that in general formula (XIII) R is methyl or butyl, $R^1$ is methyl or butyl, X is $-SR^2$ where $R^2$ is

$$-R^3O\overset{O}{\overset{\|}{C}}R^8$$

and $X^1$ is $-SR^2$ where $R^2$ is

$$-R^3O\overset{O}{\overset{\|}{C}}R^8 \quad .$$

17. The stabilizer composition claimed in claim 1 further characterised in that in general formula (XIV) R is methyl or butyl, $R^1$ is methyl or butyl, Y is $-S-$, X is $-SR^2$ where $R^2$ is

$$-R^3O\overset{O}{\overset{\|}{C}}R^8 \quad ,$$

$X^1$ is $-SR^2$ where $R^2$ is

$$-R^3O\overset{O}{\overset{\|}{C}}R^8 \quad ,$$

$m = 1$, $n = 2$ and $p = 0$.

18. The stabilizer composition claimed in claim 1 further characterised in that in general formula (XV) R is methyl or butyl, $R^1$ is methyl or butyl, X is $-SR^2$ where $R^2$ is

$$-R^3O\overset{O}{\overset{\|}{C}}R^8 \quad ,$$

Y is $-S-$, $w = 1$, $y = 1$ and $z = 1$.

19. The stabilizer composition of claim 1 further characterised in that the mercaptan containing organic compound is according to formula VI where $R^{24}$ is —H, $R^{15}$ is

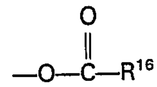

and $R^{16}$ is $R^8$.

20. The stabilizer composition of claim 19 further characterised in that the mercaptan containing organic compound is 2-mercaptoethyl oleate.

21. The stabilizer composition of claim 1 further characterised in that the mercaptan containing organic compound is a mixture of compounds according to formula VI where $R^{14}$ is —H, $R^{24}$ is —H, $R^{15}$ is

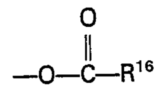

and i = 1 and compounds according to formula VI where $R^{14}$ is —H, $R^{24}$ is —H and $R^{15}$ is —OH.

22. The stabilizer composition of claim 21 further characterised in that the mercaptan containing organic compound is a mixture of 2-mercaptoethyl oleate and 2-mercaptoethanol.

23. The stabilizer composition claimed in any of the preceding claims and further characterised in that said stabilizer composition comprises from 10% to 60% by weight, preferably 20% to 40% by weight of mercaptan-containing organic compound or mixture of mercaptan-containing organic compounds (B), from 0.05% to 75% by weight, preferably 0.05% to 35% by weight, of diorganotin compound or mixture of diorganotin compounds (C), and the balance essentially of a mono-organotin compound or mixture of mono-organotin compounds (A), all weight percentages being based on the total weight of the stabilizer.

24. A polymer composition comprising a halogen-containing organic polymer characterised in that it contains a stabilizingly effective amount of a stabilizer composition as claimed in any one of claims 1 to 23.

25. A shaped article of manufacture such as a pipe comprising a halogen-containing organic polymer and characterised in that it contains a stabilizingly effective amount of a stabilizer composition as claimed in any one of claims 1 to 23.

**Patentansprüche**

1. Dreikomponentenstabilisatorzusammensetzung für Polymere mit einem durch Vermischen einer ersten und einer zweiten zinnorganischen Komponente (A, C) und einer organischen Mercaptankomponente (B) erzeugten Produkt, dadurch gekennzeichnet, daß die erste zinnorganische Komponente:

(A) eine monoorganische Zinnverbindung oder ein Gemisch monoorganischer Zinnverbindungen aus der Gruppe der Verbindungen der allgemeinen Formeln:

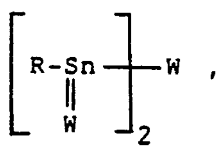 , (I)

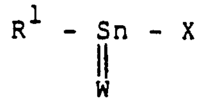 , (II)

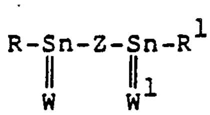 (IIa)

$R - Sn - X_3$ (III)

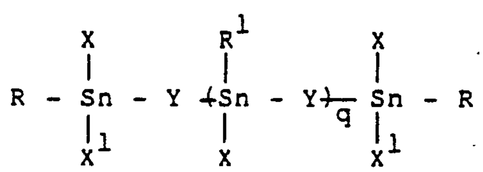

(IV)

und

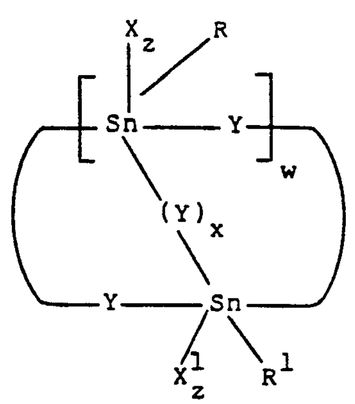 (V)

worin

X und $X^1$ gleich oder verschieden und unter $-SR^2$,

$$-O-\overset{O}{\overset{\|}{C}}-R^8$$

und $O-R^8$ ausgewählt sind, wobei in Formel (V), wenn z = 1, und in Formeln (III) und (IV) wenigstens ein X oder $X^1$ $-SR^2$ ist,

$$Y \quad -(S)_v-,\quad -W-R^3-W^1-,\quad -S-R^4-\overset{O}{\overset{\|}{C}}-O-,$$

$$-S-R^4-\overset{O}{\overset{\|}{C}}-O-R^5-O-\overset{O}{\overset{\|}{C}}-R^4-S-,\quad -S-R^3-O-\overset{O}{\overset{\|}{C}}-R^4-S-,$$

$$-S-R^3-O-\overset{O}{\overset{\|}{C}}-R^6-\overset{O}{\overset{\|}{C}}-O-R^3-S-,\quad -O-\overset{O}{\overset{\|}{C}}-R^6-\overset{O}{\overset{\|}{C}}-O-, \text{ oder}$$

$$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O- \text{ ist,}$$

W und $W^1$ gleich oder verschieden und Sauerstoff oder Schwefel sind,

$$Z \quad -S-R^4-\overset{O}{\overset{\|}{C}}-O-R^5-O-\overset{O}{\overset{\|}{C}}-R^4-S-,\quad -S-R^3-O-\overset{O}{\overset{\|}{C}}-R^4-S-,$$

$$-S-R^3-O-\overset{O}{\overset{\|}{C}}-R^6-\overset{O}{\overset{\|}{C}}-O-R^3-S- \text{ ist,}$$

R und $R^1$ gleich oder verschieden sind und unter Alkyl, Aryl, Alkenyl, Aralkyl, Alkaryl, Cycloalkyl, Cycloalkenyl,

$$-R^9-\overset{O}{\overset{\|}{C}}-R^8,\quad -R^9-\overset{O}{\overset{\|}{C}}-O-R^{12},\quad -R^9-O-\overset{O}{\overset{\|}{C}}-R^8,\quad R^{21}-\overset{O}{\overset{\|}{C}}-CH-\overset{O}{\overset{\|}{C}}-R^{13}$$

$$-R^9-O-R^{12}, \text{ und } R^9-CN;$$

ausgewählt sind,

$R^2$ Alkyl, Alkenyl, Aryl, Aralkyl, Cycloalkyl, Cycloalkenyl,

$$-R^3-O-\overset{O}{\overset{\|}{C}}-R^8,\quad -R^4-O-\overset{O}{\overset{\|}{C}}-R^4-\overset{O}{\overset{\|}{C}}-O-R^8,\quad -R^3-S-R^7 \text{ oder } -R^3-O-R^8 \text{ ist,}$$

$R^3$ Alkylen mit wenigstens zwei Kohlenstoffatomen, Arylen, Alkenylen mit wenigstens zwei Kohlenstoffatomen, Cycloalkylen oder Cycloalkenylen ist,

$R^4$ Alkylen, Arylen, Alkenylen mit wenigstens zwei Kohlenstoffatomen, Cycloalkylen oder Cycloalkenylen ist,

$R^5$ $R^3$ ist,

$R^6$ eine Kohlenstoff-Kohlenstoff-Einfachbindung oder $R^4$ ist,

$R^7$ —H oder $R^8$ ist,

$R^8$ Alkyl, Alkenyl, Aryl, Aralkyl, Alkaryl, Cycloalkyl oder Cycloalkenyl ist,

$R^9$ $C_1$—$C_4$-Alkenylen ist,

$R^{12}$ —H oder ein einbindiger $C_1$—$C_{20}$-Kohlenwasserstoffrest ist,

$R^{13}$ und $R^{21}$ gleich oder verschieden sind und jeweils $C_1$—$C_{20}$-Alkyl oder $R_1$—$C_{20}$-Alkoxy sind,

q = 0 oder eine ganze Zahl von 1 bis 4 einschließlich,

v = eine ganze Zahl von 1 bis 8 einschließlich und

w = 0, 1 oder 2, x = 0 oder 1, z = 0 oder 1, wobei, wenn x = 0, dann z = 1, wenn x = 1, dann z = 0 und w = 1, wenn w = 2, dann x = 0 und z = 1 und wenn w = 0, dann x = 0, z = 1 und Y $-W-R^3-W^1-$ oder

$$-S-R^4\overset{O}{\overset{\|}{C}}O-$$

ist, umfaßt, die organische Mercaptankomponente

(B) eine synergistisch wirksame Menge einer mercaptanhaltigen organischen Verbindung oder eines Gemisches mercaptanhaltiger organischer Verbindungen aus der Gruppe der Verbindungen der allgemeinen Formeln:

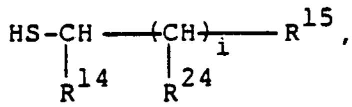 (VI)

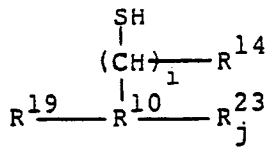 (VII)

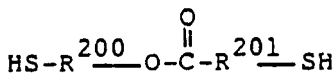 (VIIa)

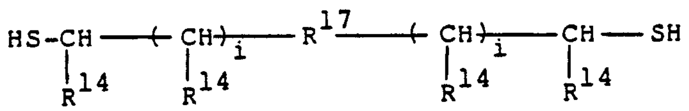 (VIII)

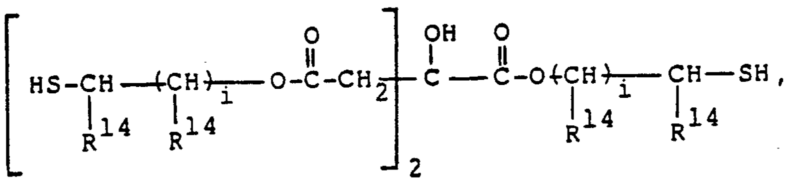 (IX)

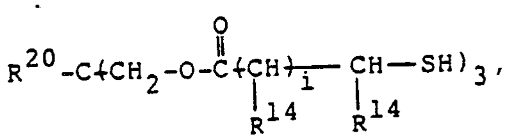 , und (X)

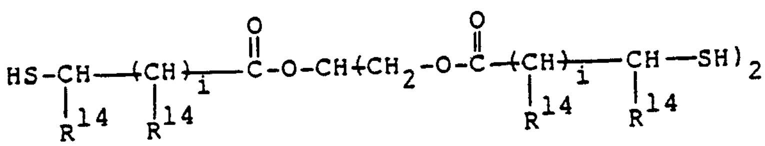 (XI)

worin

$R^{10}$ Cycloalkyl, Cycloalkenyl oder Phenyl ist,

$R^{14}$ —H, Aryl oder $C_1$—$C_{18}$-Alkyl ist,

$R^{15}$ und $R^{24}$ gleich oder verschieden und

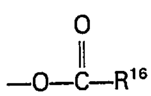 ,

—OH, —SH, Aryl, $C_1$—$C_{18}$-Alkyl oder —H sind,

$R^{16}$ —H oder $R^8$ ist,

$R^{17}$ 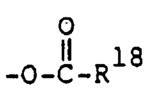 , 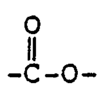 oder 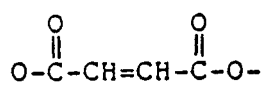 ist,

$R^{18}$ Arylen, $C_1$—$C_8$-Alkylen oder

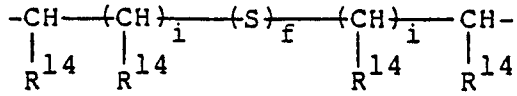 ist,

$R^{19}$ —H oder eine zweibindige Gruppe ist, die Halogen-, Hydroxy-, Mercapto- oder Alkylsubstituenten enthalten kann und die, wenn $R^{10}$ Phenyl ist, mit dem Phenyl unter Bildung eines Naphthalinringes kombiniert ist,

$R^{20}$ $-CH_3$, $-CH_2CH_3$ oder 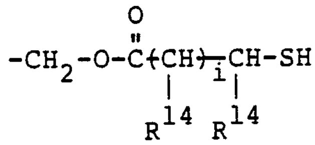 ist,

$R^{23}$ 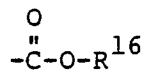, 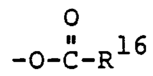, -SH, Aryl, $C_1$-$C_{18}$-Alkyl, -OH oder -H ist,

wobei in Formel (VII), wenn $R^{10}$ Phenyl ist, $R^{23}$ —OH und i = 0 ist, dann die —OH- und SH-Gruppen nicht an benachbarten Kohlenstoffatomen stehen,

$R^{200}$ und $R^{201}$ gleich oder verschieden und Alkylen, Alkenylen, Arylen, Cycloalkylen oder Cycloalkenylen oder mit einer oder zwei Grupen —R, —O—$R^7$, —$R^9$—O—$R^7$,

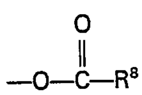 oder 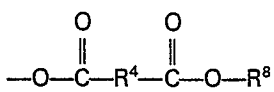

substituiertes Alkylen, Alkenylen, Arylen, Cycloalkylen oder Cycloalkenylen sind,

wobei R, $R^7$, $R^8$, $R^4$ und $R^9$ wie oben definiert sind,

i = 0 oder eine ganze Zahl von 1 bis 6 einschließlich

j = 0, 1, 2 oder 3 und

f = 1 oder 2,

wobei 1), wenn eine monoorganische Zinnverbindung nach Formel (I) verwendet wird, die mercaptanhaltigen organischen Verbindungen unter Verbindungen der Formel VI, worin $R^{15}$ und $R^{24}$ gleich oder verschieden und

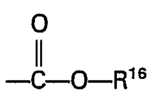 ,

—OH, —SH, Aryl, $C_1$—$C_{18}$-Alkyl oder —H sind und $R_{14}$ und i wie oben definiert sind,

Verbindungen der Formel VII, worin $R^{23}$

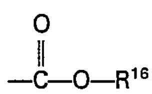 ,

—SH, Aryl, $C_1$—$C_{18}$-Alkyl, —OH oder —H ist und $R^{14}$, i, $R^{10}$, $R^{19}$ und j wie oben definiert sind, und Verbindungen der Formeln VIII, IX, X und/oder XI ausgewählt sind, und 2), wenn eine monoorganische Zinnverbindung nach den Formeln II, III, IV oder V, worin X —$SR^2$ ist und $R^2$ Alkyl, Alkenyl, Aryl, Aralkyl, Cycloalkyl oder Cycloalkenyl ist, verwendet wird, die mercaptanhaltigen organischen Verbindungen unter Verbindungen der Formel VI, worin, wenn $R^{15}$ oder $R^{24}$ —OH ist, SH- und OH-Gruppen um wenigstens drei Kohlenstoffatome voneinander getrennt sind, Verbindungen mit der Formel VII, worin, wenn $R^{23}$ —OH ist, die —SH- und —OH-Gruppen um wenigstens drei Kohlenstoffatome voneinander getrennt sind, und/oder Verbindungen der Formeln VIIa, VIII, IX, X und/oder XI ausgewählt sind, umfaßt und die zweite zinnorganische Komponente

(C) eine synergistische Menge einer diorganischen Zinnverbindung oder eines Gemisches diorganischer Verbindungen, die unter Verbindungen der allgemeinen Formeln

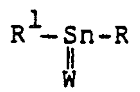 , (XII) 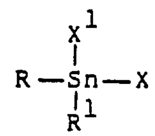 , (XIII)

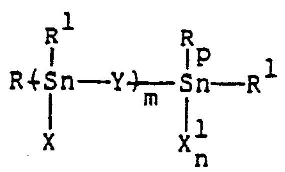 (XIV) und 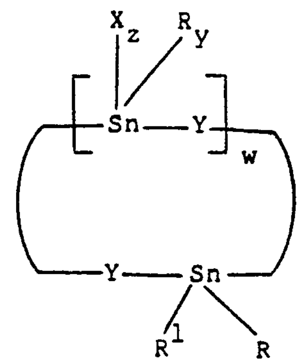 (XV)

ausgewählt sind, worin

R, $R^1$, W, X, $X^1$, Y, w und z wie oben definiert sind,

n = 0, 1 der 2, p = 0, 1 oder 2, wobei n + p = 2 und m = 1 bis 5,

y = 1 oder 2, y + z = 2, wobei, wenn w = 0, dann Y $-W-R^3-W^1-$ oder

$$-SR^4\overset{\overset{O}{\|}}{C}O-$$

ist und in Formel (XV), wenn z = 1, und in den Formeln (XIII) und (XIV) wenigstens eine X oder $X^1$ $-SR^2$ ist, umfaßt.

2. Stabilisatorzusammensetzung nach Anspruch 1, dadurch gekennzeichnet, daß in der allgemeinen Formel (I) R Methyl, Butyl oder Octyl und W Schwefel ist.

3. Stabilisatorzusammensetzung nach Anspruch 1, dadurch gekennzeichnet, daß in der allgemeinen Formel (II) $R^1$ Methyl oder Butyl, W Schwefel und X $-SR^2$ ist, worin $R^2$

$$R^3O\overset{\overset{O}{\|}}{C}R^8 \text{ ist.}$$

4. Stabilisatorzusammensetzung nach Anspruch 1, dadurch gekennzeichnet, daß in der allgemeinen Formel (IIa) R und $R^1$ Methyl, Butyl, Octyl oder

$$-R^9-\overset{\overset{O}{\|}}{C}-O-R^{12}$$

sind, W und $W^1$ Sauerstoff oder Schwefel sind und

$$Z\ -S-R^3-O-\overset{\overset{O}{\|}}{C}-R^6-\overset{\overset{O}{\|}}{C}-O-R^3-S-,$$

$$-S-R^3-O-\overset{\overset{O}{\|}}{C}-R^4-S- \text{ oder } -S-R^4-\overset{\overset{O}{\|}}{C}-O-R^5-O-\overset{\overset{O}{\|}}{C}-R^4-S- \text{ ist.}$$

5. Stabilisatorzusammensetzung nach Anspruch 1, dadurch gekennzeichnet, daß in der allgemeinen Formel (III) R Methyl oder Butyl und X $-SR^2$ ist, worin $R^2$

$$-R^3O\overset{\overset{O}{\|}}{C}R^8 \text{ ist.}$$

6. Stabilisatorzusammensetzung nach Anspruch 1, dadurch gekennzeichnet, daß in der allgemeinen Formel (IV) R Methyl, X —$SR^2$, worin $R^2$

$$-R^3O\overset{\overset{O}{\|}}{C}R^8$$

ist, $R^1$ Methyl, $X^1$ —$SR^2$, worin $R^2$

$$-R^3O\overset{\overset{O}{\|}}{C}R^8$$

ist, Y —S— und q = 0 ist.

7. Stabilisatorzusammensetzung nach Anspruch 1, dadurch gekennzeichnet, daß in der allgemeinen Formel (V) R Methyl, X —$SR^2$, worin $R^2$

$$-R^3O\overset{\overset{O}{\|}}{C}R^8$$

ist, $R^1$ Methyl, $X^1$ —$SR^2$, worin $R^2$

$$-R^3O\overset{\overset{O}{\|}}{C}R^8$$

ist, Y —S—, w = 1, x = 0 und z = 1 ist.

8. Stabilisatorzusammensetzung nach Anspruch 1, dadurch gekennzeichnet, daß in der allgemeinen Formel (VI) $R^{14}$ —H, $R^{24}$ —R, $R^{15}$

$$-O\overset{\overset{O}{\|}}{C}R^{16}$$

und i = 1 ist.

9. Stabilisatorzusammensetzung nach Anspruch 1, dadurch gekennzeichnet, daß in der allgemeinen Formel (VII) $R^{10}$ Phenyl, $R^{14}$ —H, $R^{23}$ —H, $R^{19}$ —H, i = 1 und j = 1 ist.

10. Stabilisatorzusammensetzung nach Anspruch 1, dadurch gekennzeichnet, daß in der allgemeinen Formel (VIIa) $R^{200}$ —$CH_2CH_2$— oder

$$CH_2\underset{\underset{C_9H_{19}}{|}}{CH}-$$

und $R^{201}$ —$CH_2$— oder

$$-\underset{\underset{OH}{|}}{CH}$$ ist.

11. Stabilisatorzusammensetzung nach Anspruch 1, dadurch gekennzeichnet, daß in der allgemeinen Formel (VIII) $R^{14}$ —H, $R^{17}$

$$O\overset{\overset{O}{\|}}{C}CH{=}CH\overset{\overset{O}{\|}}{C}O-$$

und i = 1 ist.

12. Stabilisatorzusammensetzung nach Anspruch 1, dadurch gekennzeichnet, daß in der allgemeinen Formel (IX) $R^{14}$ —H und i = 1 ist.

13. Stabilisatorzusammensetzung nach Anspruch 1, dadurch gekennzeichnet, daß in der allgemeinen Formel (X) $R^{20}$ —$C_2H_5$ oder

$$-CH_2O\overset{\overset{O}{\|}}{C}\text{-}(CH)_i\text{-}\underset{\underset{R^{14}}{|}}{C}HSH \quad ,$$

$R^{14}$ —H und i = 1 ist.

14. Stabilisatorzusammensetzung nach Anspruch 1, dadurch gekennzeichnet, daß in der allgemeinen Formel (XI) $R^{14}$ —H und i = 1 ist.

15. Stabilisatorzusammensetzung nach Anspruch 1, dadurch gekennzeichnet, daß in der allgemeinen Formel (XII) R Methyl oder Butyl, $R^1$ Methyl oder Butyl und W Schwefel ist.

16. Stabilisatorzusammensetzung nach Anspruch 1, dadurch gekennzeichnet, daß in der allgemeinen Formel (XIII) R Methyl oder Butyl, $R^1$ Methyl oder Butyl, X —$SR^2$, worin $R^2$

$$-R^3O\overset{\overset{\displaystyle O}{\|}}{C}R^8$$

ist, und $X^1$ —$SR^2$, worin $R^2$

$$-R^3O\overset{\overset{\displaystyle O}{\|}}{C}R^8 \text{ ist, ist.}$$

17. Stabilisatorzusammensetzung nach Anspruch 1, dadurch gekennzeichnet, daß in der allgemeinen Formel (XIV) R Methyl oder Butyl, $R^1$ Methyl oder Butyl, Y —S—, X —$SR^2$, worin $R^2$

$$-R^3O\overset{\overset{\displaystyle O}{\|}}{C}R^8$$

ist, $X^1$ —$SR^2$, worin $R^2$

$$-R^3O\overset{\overset{\displaystyle O}{\|}}{C}R^8$$

ist, m = 1, n = 2 und p = 0 ist.

18. Stabilisatorzusammensetzung nach Anspruch 1, dadurch gekennzeichnet, daß in der allgemeinen Formel (XV) R Methyl oder Butyl, $R^1$ Methyl oder Butyl, X —$SR^2$, worin $R^2$

$$-R^3O\overset{\overset{\displaystyle O}{\|}}{C}R^8$$

ist, Y —S—, w = 1, y = 1 und z = 1 ist.

19. Stabilisatorzusammensetzung nach Anspruch 1, dadurch gekennzeichnet, daß die mercaptanhaltige organische Verbindung die Formel VI hat, worin $R^{24}$ —H, $R^{15}$

$$-O-\overset{\overset{\displaystyle O}{\|}}{C}-R^{16}$$

und $R^{16}$ $R^8$ ist.

20. Stabilisatorzusammensetzung nach Anspruch 19, dadurch gekennzeichnet, daß die mercaptanhaltige organische Verbindung 2-Mercaptoethyloleat ist.

21. Stabilisatorzusammensetzung nach Anspruch 1, dadurch gekennzeichnet, daß die mercaptanhaltige organische Verbindung ein Gemisch von Verbindungen der Formel VI, worin $R^{14}$ —H, $R^{24}$ —H, $R^{15}$

$$-O-\overset{\overset{\displaystyle O}{\|}}{C}-R^{16}$$

und i = 1 ist, und von Verbindungen der Formel VI, worin $R^{14}$ —H, $R^{24}$ —H und $R^{15}$ —OH ist, ist.

22. Stabilisatorzusammensetzung nach Anspruch 21, dadurch gekennzeichnet, daß die mercaptanhaltige organische Verbindung ein Gemisch von 2-Mercaptoethyloleat und 2-Mercaptoethanol ist.

23. Stabilisatorzusammensetzung nach einem der vorausgehenden Ansprüche, dadurch gekennzeichnet, daß die Stabilisatorzusammensetzung 10 bis 60 Gew.-%, vorzugsweise 20 bis 40 Gew.-% mercaptanhaltige organische Verbindung oder eines Gemisches mercaptanhaltiger organischer Verbindungen (B), 0,05 bis 75 Gew.-%, vorzugsweise 0,05 bis 35 Gew.-% diorganische Zinnverbindung oder eines Gemisches diorganischer Zinnverbindungen (C) und als Rest im wesentlichen eine

monoorganische Zinnverbindung oder ein Gemisch monoorganischer Zinnverbindungen (A) umfaßt, wobei alle Gewichtsprozentsätze auf dem Gesamtgewicht des Stabilisators basieren.

24. Polymerzusammensetzung mit einem halogenhaltigen organischen Polymer, dadurch gekennzeichnet, daß sie eine zur Stabilisierung wirksame Menge einer Stabilisatorzusammensetzung nach einem der Ansprüche 1 bis 23 enthält.

25. Formling, wie ein Rohr, aus einem halogenhaltigen organischen Polymer, dadurch gekennzeichnet, daß er eine zur Stabilisierung wirksame Menge einer Stabilisatorzusammensetzung nach einem der Ansprüche 1 bis 23 enthält.

## Revendications

1. Composition stabilisante à 3 composants pour des polymères, qui comprend un produit obtenu en mélangeant un premier et un second composant organoétain (A, C) et un composant mercaptan organique (B), caractérisée en ce que le premier composant organoétain comprend:

(A) un composé de mono-organoétain ou mélange de composés de mono-organoétain choisis parmi les composés des formules générales:

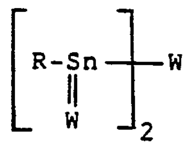 , (I)

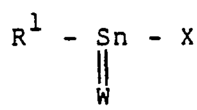 , (II)

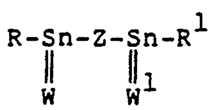 (IIa)

$R - Sn - X_3$ (III)

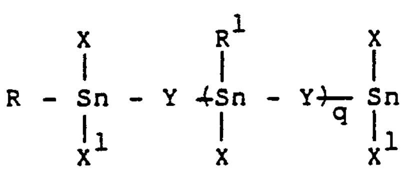 (IV)

et

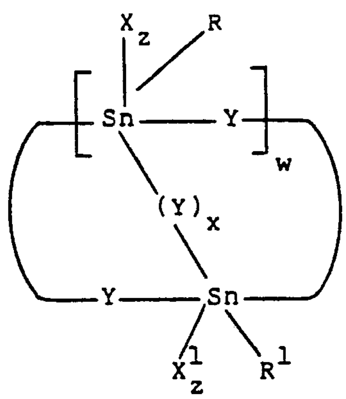 (V)

où

X et $X^1$ sont identiques ou différents et sont choisis parmi $—SR^2$,

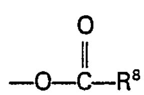

et $O—R^8$, avec la restriction que dans la formule (V) lorsque z = 1 et dans les formules (III) et (IV) au moins un X ou $X^1$ est $—SR^2$;

Y est 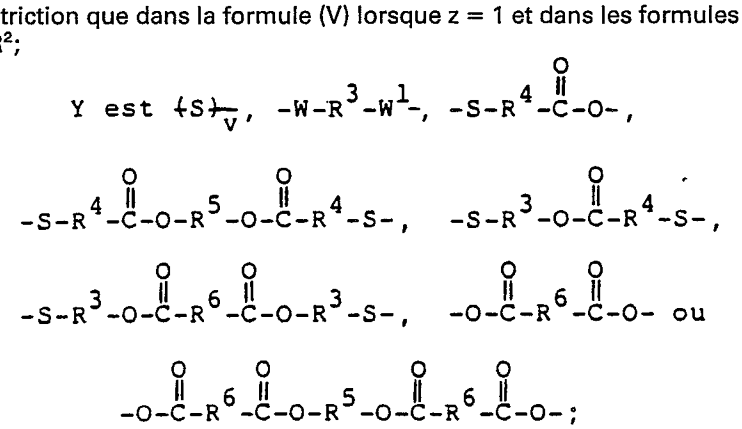

W et $W^1$ sont identiques ou différents et sont l'oxygène ou le soufre;

$$Z \text{ est } -S-R^4-\overset{O}{\overset{\|}{C}}-O-R^5-O-\overset{O}{\overset{\|}{C}}-R^4-S-, \quad -S-R^3-O-\overset{O}{\overset{\|}{C}}-R^4-S- \text{ ou}$$

$$-S-R^3-O-\overset{O}{\overset{\|}{C}}-R^6-\overset{O}{\overset{\|}{C}}-O-R^3-S-;$$

R et $R^1$ sont identiques ou différents et sont choisis parmi alcoyle, aryle, alcényle, aralcoyle, alcaryle, cycloalcoyle, cycloalcényle,

$$-R^9-\overset{O}{\overset{\|}{C}}-R^8, \quad -R^9-\overset{O}{\overset{\|}{C}}-O-R^{12}, \quad -R^9-O-\overset{O}{\overset{\|}{C}}-R^8, \quad R^{21}-\overset{O}{\overset{\|}{C}}-CH-\overset{O}{\overset{\|}{C}}-R^{13}$$

$$-R^9-O-R^{12} \text{ et } R^9-CN;$$

$R^2$ est alcoyle, alcényle, aryle, aralcoyle, cycloalcoyle, cycloalcényle,

$$-R^3-O-\overset{O}{\overset{\|}{C}}-R^8, \quad -R^4-O-\overset{O}{\overset{\|}{C}}-R^4-\overset{O}{\overset{\|}{C}}-O-R^8, \quad -R^3-S-R^7, \text{ ou } -R^3-O-R^8;$$

$R^3$ est alcoylène d'au moins 2 atomes de carbone, arylène, alcénylène d'au moins 2 atomes de carbone, cycloalcoylène ou cycloalcénylène;

$R^4$ est alcoylène, arylène, alcénylène d'au moins 2 atomes de carbone, cycloalcoylène ou cycloalcénylène;

$R^5$ est $R^3$;

$R^6$ est une liaison carbone-carbone simple ou $R^4$;

$R^7$ est —H ou $R^8$;

$R^8$ est alcoyle, alcényle, aryle, aralcoyle, alcaryle, cycloalcoyle ou cycloalcényle;

$R^9$ est alcénylène en $C_1$ à $C_4$;

$R^{12}$ est —H ou un radical hydrocarboné monovalent en $C_1$ à $C_{20}$;

$R^{13}$ et $R^{21}$ sont identiques ou différents et sont chacun alcoyle en $C_1$ à $C_{20}$ ou alcoxy en $C_1$ à $C_{20}$;

q = 0 ou un entier de 1 à 4 inclusivement;

v = un entier de 1 à 8 inclusivement; et

w = 0, 1 ou 2, x = 0 ou 1, z = 0 ou 1 avec la restriction que lorsque x = 0, alors z = 1 et lorsque x = 1, alors z = 0 et w = 1, lorsque w = 2, alors x = 0 et z = 1 et lorsque w = 0, alors x = 0, z = 1 et Y est —W—$R^3$—$W^1$— ou

$$-S-R^4\overset{O}{\overset{\|}{C}}O- \quad ;$$

le composant mercaptan organique comprend

(B) une quantité synergiquement efficace d'un composé organique contenant la fonction mercaptan ou mélange de composés organiques contenant la fonction mercaptan choisis parmi les composés des formules générales:

$$HS-\underset{R^{14}}{\underset{|}{CH}}-(\underset{R^{24}}{\underset{|}{CH}})_i-R^{15}, \qquad \text{(VI)}$$

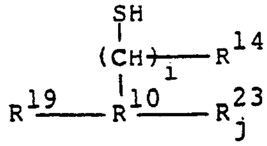

(VII)

$$HS-R^{200}-O-\overset{O}{\overset{\|}{C}}-R^{201}-SH \qquad \text{(VIIa)}$$

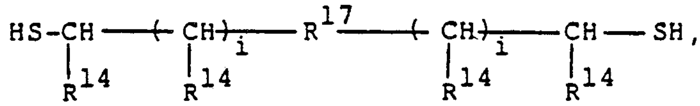 (VIII)

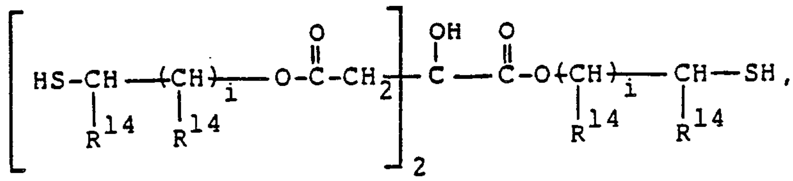 (IX)

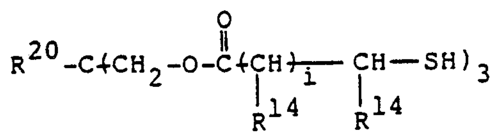 et (X)

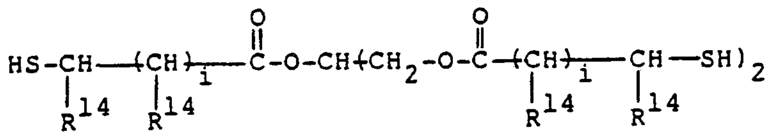 (XI)

où

$R^{10}$ est cycloalcoyle, cycloalcényle ou phényle;

$R^{14}$ est —H, aryle ou alcoyle en $C_1$ à $C_{18}$;

$R^{15}$ et $R^{24}$ sont identiques ou différents et sont

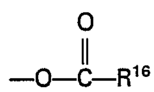 ,

—OH, —SH, aryle, alcoyle en $C_1$ à $C_{18}$ ou —H;

$R^{16}$ est —H ou $R^8$;

$R^{17}$ est 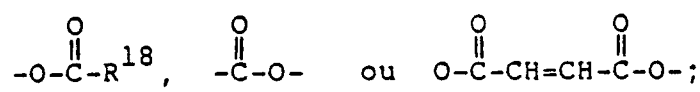

$R^{18}$ est arylène, alcoylène en $C_1$ à $C_8$ ou

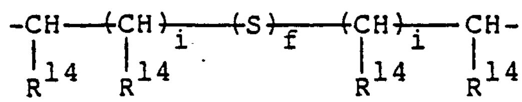

$R^{19}$ est —H ou un radical divalent qui peut contenir des substituants halogène, hydroxyle, mercapto ou alcoyle et qui, lorsque $R^{10}$ est phényle, se combine avec le phényle pour former un cycle naphtalène;

$R^{20}$ est $-CH_3$, $-CH_2CH_3$, ou 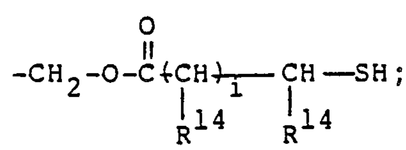

$R^{23}$ est 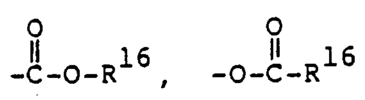 -SH, aryle, alcoyle en $C_1$ à $C_{18}$, -OH ou -H,

avec la restriction que dans la formule (VII) lorsque $R^{10}$ est phényle, $R^{23}$ est —OH et i = 0, alors les radicaux —OH et —SH sont portés par des atomes de carbone non adjacents;

$R^{200}$ et $R^{201}$ sont identiques ou différents et sont alcoylène, alcénylène, arylène, cycloalcoylène ou cycloalcénylène; ou bien alcoylène, alcénylène, arylène, cycloalcoylène ou cycloalcénylène chacun substitué par un ou deux radicaux —R, —O—$R^7$, —$R^9$—O—$R^7$,

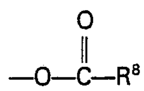 ou 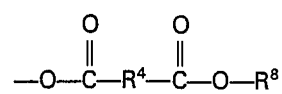 ;

R, $R^7$, $R^8$, $R^4$ et $R^9$ sont tels que définis précédemment;
i = 0 ou un entier de 1 à 6 inclusivement;
j = 0, 1, 2 ou 3; et
f = 1 ou 2;

avec la restriction que 1) lorsqu'un composé de mono-organoétain de formule (I) est utilisé, alors les composés organiques contenant la fonction mercaptan sont choisis parmi les composés de formule VI où $R^{15}$ et $R^{24}$ sont identiques ou différents et sont —OH, —SH, aryle, alcoyle en $C_1$ à $C_{18}$ ou —H, et $R_{14}$ et i sont tels que définis précédemment; les composés de formule VII où $R^{23}$ est

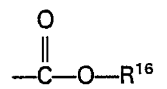 ,

—SH, aryle, alcoyle en $C_1$ à $C_{18}$, —OH ou —H, et $R^{14}$, i, $R^{10}$, $R^{19}$ et j sont tels que définis précédemment; et les composés de formule VIII, IX, X et/ou XI; et 2) lorsqu'un composé de mono-organoétain de formule II, III, IV ou V où X est —$SR^2$ et $R^2$ est alcoyle, alcényle, aryle, aralcoyle, cycloalcoyle ou cycloalcényle est utilisé, alors les composés organiques contenant la fonction mercaptan sont choisis parmi les composés de formule VI où lorsque soit $R^{15}$, soit $R^{24}$ est —OH, alors les radicaux —SH et —OH sont séparés par au moins 3 atomes de carbone; les composés de formule VII où lorsque $R^{23}$ est —OH, alors les radicaux —SH et —OH sont séparés par au moins 3 atomes de carbone; et/ou les composés des formules VIIa, VIII, IX, X et/ou XI et le second composant organoétain comprend

(C) une quantité synergique d'un composé de diorganoétain ou mélange de composés de diorganoétain choisis parmi les composés des formules générales

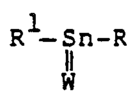 , (XII)

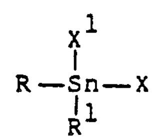 , (XIII)

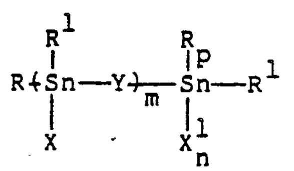 (XIV)

et

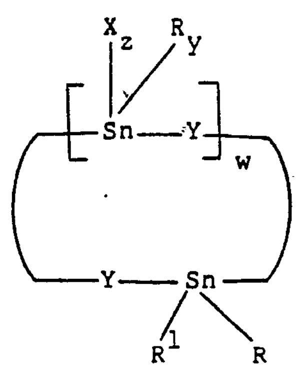 (XV)

où

R, $R^1$, W, X, $X^1$, Y, w et z sont tels que définis précédemment;
n = 0, 1 ou 2, p = 0, 1 ou 2 avec la restriction que n + p = 2, et m = 1 à 5;
y = 1 ou 2, y + z = 2, avec la restriction que lorsque w = 0, alors Y est —W—$R^3$—$W^1$—, ou

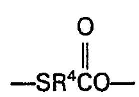

et dans la formule (XV) lorsque z = 1 et dans les formules (XIII) et (XIV) au moins un X ou $X^1$ est —$SR^2$.

2. Composition stabilisante suivant la revendication 1, caractérisée en outre en ce que dans la formule générale (I), R est méthyle, butyle ou octyle et W est le soufre.

3. Composition stabilisante suivant la revendication 1, caractérisée en outre en ce que dans la formule générale (II), $R^1$ est méthyle ou butyle, W est le soufre et X est —$SR^2$ où $R^2$ est

$$R^3O\overset{\overset{\displaystyle O}{\|}}{C}R^8 \quad .$$

4. Composition stabilisante suivant la revendication 1, caractérisée en outre en ce que dans la formule générale (IIa), R et $R^1$ sont méthyle, butyle, octyle ou

$$-R^9-\overset{\overset{\displaystyle O}{\|}}{C}-O-R^{12} \quad ;$$

W et $W^1$ sont l'oxygène ou le soufre et

$$Z \text{ est } -S-R^3-O-\overset{\overset{\displaystyle O}{\|}}{C}-R^6-\overset{\overset{\displaystyle O}{\|}}{C}-O-R^3-S-,$$

$$-S-R^3-O-\overset{\overset{\displaystyle O}{\|}}{C}-R^4-S- \text{ ou } -S-R^4-\overset{\overset{\displaystyle O}{\|}}{C}-O-R^5-O-\overset{\overset{\displaystyle O}{\|}}{C}-R^4-S-.$$

5. Composition stabilisante suivant la revendication 1, caractérisée en outre en ce que dans la formule générale (III), R est méthyle ou butyle et X est —$SR^2$ où $R^2$ est

$$-R^3O\overset{\overset{\displaystyle O}{\|}}{C}R^8 \quad .$$

6. Composition stabilisante suivant la revendication 1, caractérisée en outre en ce que dans la formule générale (IV), R est méthyle, X est —$SR^2$ où $R^2$ est

$$-R^3O\overset{\overset{\displaystyle O}{\|}}{C}R^8 \quad ,$$

$R^1$ est méthyle, $X^1$ est —$SR^2$ où $R^2$ est

$$-R^3O\overset{\overset{\displaystyle O}{\|}}{C}R^8$$

et Y est —S—.

7. Composition stabilisante suivant la revendication 1, caractérisée en outre en ce que dans la formule générale (V), R est méthyle, X est —$SR^2$ où $R^2$ est

$$-R^3O\overset{\overset{\displaystyle O}{\|}}{C}R^8 \quad ,$$

$R^1$ est méthyle, $X^1$ est —$SR^2$ où $R^2$ est

$$-R^3O\overset{\overset{\displaystyle O}{\|}}{C}R^8 \quad ,$$

Y est —S—, w = 1, x = 0 et z = 1.

8. Composition stabilisante suivant la revendication 1, caractérisée en outre en ce que dans la formule générale (VI), $R^{14}$ est —H, $R^{24}$ est —R, $R^{15}$ est

$$-O\overset{\overset{\displaystyle O}{\|}}{C}R^{16}$$

et i = 1.

9. Composition stabilisante suivant la revendication 1, caractérisée en outre en ce que dans la formule générale (VII), $R^{10}$ est phényle, $R^{14}$ est —H, $R^{23}$ est —H, $R^{19}$ est —H, i = 1 et j = 1.

10. Composition stabilisante suivant la revendication 1, caractérisée en outre en ce que dans la formule générale (VIIa), $R^{200}$ est $—CH_2CH_2—$ ou

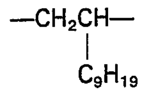 ,

et $R^{201}$ est $—CH_2—$ ou

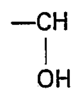 .

11. Composition stabilisante suivant la revendication 1, caractérisée en outre en ce que dans la formule générale (VIII), lorsque $R^{14}$ est —H, $R^{17}$ est

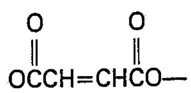

et i = 1.

12. Composition stabilisante suivant la revendication 1, caractérisée en outre en ce que dans la formule générale (IX), $R^{14}$ est —H et i = 1.

13. Composition stabilisante suivant la revendication 1, caractérisée en outre en ce que dans la formule générale (X), $R^{20}$ est $—C_2H_5$ ou

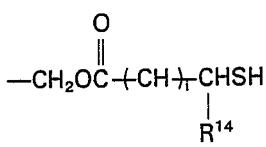 ,

$R^{14}$ est —H et i = 1.

14. Composition stabilisante suivant la revendication 1, caractérisée en outre en ce que dans la formule générale (XI), $R^{14}$ est —H et i = 1.

15. Composition stabilisante suivant la revendication 1, caractérisée en outre en ce que dans la formule générale (XII), R est méthyle ou butyle, $R^1$ est méthyle ou butyle et W est le soufre.

16. Composition stabilisante suivant la revendication 1, caractérisée en outre en ce que dans la formule générale (XIII), R est méthyle ou butyle, $R^1$ est méthyle ou butyle, X est $—SR^2$ où $R^2$ est

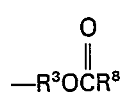

et $X^1$ est $—SR^2$ où $R^2$ est

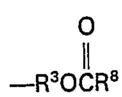 .

17. Composition stabilisante suivant la revendication 1, caractérisée en outre en ce que dans la formule générale (XIV), R est méthyle ou butyle, $R^1$ est méthyle ou butyle, Y est —S—, X est $—SR^2$ où $R^2$ est

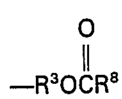 ,

$X^1$ est $—SR^2$ où $R^2$ est

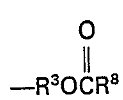 ,

m = 1, n = 2 et p = 0.

18. Composition stabilisante suivant la revendication 1, caractérisée en outre en ce que dans la formule générale (XV), R est méthyle ou butyle, $R^1$ est méthyle ou butyle, X est —$SR^2$ où $R^2$ est

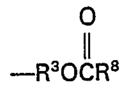 ,

Y est —S—, w = 1, y = 1 et z = 1.

19. Composition stabilisante suivant la revendication 1, caractérisée en outre en ce que le composé organique contenant la fonction mercaptan est de formule VI où $R^{24}$ est —H, $R^{15}$ est

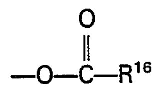

et $R^{16}$ est $R^8$.

20. Composition stabilisante suivant la revendication 19, caractérisée en outre en ce que le composé organique contenant la fonction mercaptan est l'oléate de 2-mercaptoéthyle.

21. Composition stabilisante suivant la revendication 1, caractérisée en outre en ce que le composé organique contenant la fonction mercaptan est un mélange de composés de formule VI où $R^{14}$ est —H, $R^{24}$ est —H, $R^{15}$ est

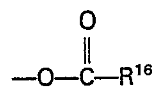

et i = 1 et de composés de formule VI où $R^{14}$ est —H, $R^{24}$ est —H et $R^{15}$ est —OH.

22. Composition stabilisante suivant la revendication 21, caractérisée en outre en ce que le composé organique contenant la fonction mercaptan est un mélange d'oléate de 2-mercaptoéthyle et de 2-mercapto-éthanol.

23. Composition stabilisante suivant l'une quelconque des revendications précédentes, caractérisée en outre en ce que la composition stabilisante comprend 10 à 60% en poids et de préférence 20 à 40% en poids du composé organique contenant la fonction mercaptan ou mélange de composés organiques contenant la fonction mercaptan (B), 0,05 à 75% en poids et de préférence 0,05 à 35% en poids du composé de diorganoétain ou mélange de composés de diorganoétain (C), et pour le reste essentiellement un composé de mono-organoétain ou mélange de composés de mono-organoétain (A), tous les pourcentages en poids étant basés sur le poids total du stabilisant.

24. Composition polymère comprenant un polymère organique halogéné, caractérisée en ce qu'elle contient une quantité stabilisante efficace d'une composition stabilisante suivant l'une quelconque des revendications 1 à 23.

25. Produit manufacturé façonné tel qu'un tuyau comprenant un polymère organique halogéné, caractérisé en ce qu'il contient une quantité stabilisante efficace d'une composition stabilisante suivant l'une quelconque des revendications 1 à 23.